Europäisches Patentamt

European Patent Office

Office européen des brevets

(11) Veröffentlichungsnummer: **0 501 583 A2**

# EUROPÄISCHE PATENTANMELDUNG

(21) Anmeldenummer: **92200527.7**

(22) Anmeldetag: **24.02.92**

(51) Int. Cl.5: **G11B 25/06**, G11B 33/02, G11B 15/02, G11B 31/00

(30) Priorität: **01.03.91 AT 436/91**

(43) Veröffentlichungstag der Anmeldung:
**02.09.92 Patentblatt 92/36**

(84) Benannte Vertragsstaaten:
**CH DE ES FR GB IT LI**

(71) Anmelder: **N.V. Philips' Gloeilampenfabrieken
Groenewoudseweg 1
NL-5621 BA Eindhoven(NL)**

(72) Erfinder: **Hohenbüchler, Robert**

c/o INT. OCTROOIBUREAU B.V., Prof.
Holstlaan 6
NL-5656 AA Eindhoven(NL)
Erfinder: **Bayer, Ernst**
c/o INT. OCTROOIBUREAU B.V., Prof.
Holstlaan 6
NL-5656 AA Eindhoven(NL)

(74) Vertreter: **Van Weele, Paul Johannes Frits
INTERNATIONAAL OCTROOIBUREAU B.V.
Prof. Holstlaan 6
NL-5656 AA Eindhoven(NL)**

(54) **Taschendiktiergerät.**

(57) Ein Taschendiktiergerät (1), das in seiner Betriebsweise zum Aufnehmen von Diktaten in einer Hand gehalten wird und dessen für diese Betriebsweise erforderlichen Betriebsarten mittels mindestens einer Handhabe (23, 25) einschaltbar sind, ist zusätzlich zu der ersten Betriebsweise zum Aufnehmen von Diktaten in einer zweiten Betriebsweise zum Auswerten von Diktaten betreibbar, in der die für diese zweite Betriebsweise erforderlichen Betriebsarten anstelle mit mindestens einer Handhabe mit einer entsprechenden Steuereinrichtung (29) auf ferngesteuerte Weise einschaltbar sind

FIG.1

EP 0 501 583 A2

Die Erfindung betrifft ein Taschendiktiergerät, das in seiner Betriebsweise zum Aufnehmen von Diktaten in einer Hand gehalten wird und das zum Speichern und Wiedergeben von den Diktaten entsprechenden, in einer zeitlichen Aufeinanderfolge auftretenden Sprachsignalen ausgebildet ist und das ein Gehäuse und einen von dem Gehäuse umschlossenen Aufnahmeraum zum Aufnehmen eines zum Speichern der Sprachsignale in Korrelation zu ihrer zeitlichen Aufeinanderfolge vorgesehenen Speichers aufweist und das zum Durchführen einer Vorwärts-Betriebsart und einer Rückwärts-Betriebsart ausgebildet ist, wobei in der Vorwärts-Betriebsart ausgehend von einem Startspeicherbereich die Sprachsignale in Korrelation zu ihrer zeitlichen Aufeinanderfolge in den Speicher einspeicherbar oder zuvor in den Speicher in Korrelation zu ihrer zeitlichen Aufeinanderfolge eingespeicherte Sprachsignale aus dem Speicher in Korrelation zu ihrer ursprünglichen zeitlichen Aufeinanderfolge wieder auslesbar sind und wobei in der Rückwärts-Betriebsart nach einem in Korrelation zu ihrer ursprünglichen zeitlichen Aufeinanderfolge erfolgten Einspeichern oder Wiederauslesen vom Startspeicherbereich weg zu diesem Startspeicherbereich zurückkehrbar ist, und das mindestens eine von Hand aus zwischen mindestens zwei Einschaltpositionen, von denen eine Vorwärts-Einschaltposition und eine Rückwärts-Einschaltposition ist, verstellbare Handhabe aufweist, wobei in der Betriebsweise des Gerätes zum Aufnehmen von Diktaten mit der betreffenden Handhabe durch deren händische Verstellung in ihre Vorwärts-Einschaltposition die Vorwärts-Betriebsart und mit der betreffenden Handhabe durch deren händische Verstellung in ihre Rückwärts-Einschaltposition die Rückwärts-Betriebsart einschaltbar sind.

Taschendiktiergeräte der im eingangs angeführten Absatz angegebenen Gattung sind seit langem in einer Vielzahl von Ausführungsvarianten bekannt. Es wurde zum Beispiel ein solches Taschendiktiergerät für in Kassetten untergebrachte Magnetbänder als Speicher für die den Diktaten entsprechenden Sprachsignale von der Anmelderin unter der Typennummer LFH 0195 in den Handel gebracht. Das älteste solche Taschendiktiergerät der Anmelderin wurde unter der Typennummer LFH 0085 bereits im Jahre 1967 in den Handel gebracht.

Bei diesen bekannten Taschendiktiergeräten ist baulich nur eine Betriebsweise zum Aufnehmen von Diktaten vorgesehen, wobei die hiefür erforderlichen Betriebsarten, in denen ein Speichern und ein Wiedergeben von aufeinanderfolgenden Sprachsignalen erfolgt, mit an diesen Taschendiktiergeräten vorgesehenen Handhaben einschaltbar sind. Die Handhaben sind für ein Betätigen bei in der Hand gehaltenem Taschendiktiergerät ausgebildet. Es sind demgemäß solche Taschendiktiergeräte für das Auswerten von Diktaten, das heißt für das Erstellen von Unterlagen durch einen Schreibvorgang, bei dem der Diktatinhalt festgehalten wird, weder vorgesehen noch geeignet, weil dabei die Hände bzw. Finger zum Bedienen einer Schreibmaschinentastatur oder einer entsprechenden alphanumerischen Eingabatastatur beim Niederschreiben der Diktate benötigt werden und nicht zum Einschalten der Betriebsarten eines Taschendiktiergerätes von Hand aus zur Verfügung stehen. Daher wird das Auswerten von mit solchen Taschendiktiergeräten aufgenommenen Diktaten, also das Niederschreiben des Diktatinhaltes durch eine Schreibkraft, stets unter Verwendung eines separaten Gerätes, nämlich eines Auswertegerätes vorgenommen, in das der Speicher, in dem die den aufgenommenen Diktaten entsprechenden Sprachsignale gespeichert sind, nach seiner Entnahme aus einem solchen bekannten Taschendiktiergerät eingesetzt wird. Zum Auswerten von mit einem solchen bekannten Taschendiktiergerät aufgenommenen Diktaten muß somit erstens der Speicher aus dem Taschendiktiergerät entnommen werden und ist zweitens ein separates Auswertegerät erforderlich, in das dieser Speicher zum Auswerten der Diktate eingesetzt wird.

Solche Auswertegeräte für in Kassetten untergebrachte Magnetbänder als Speicher für die den Diktaten entsprechenden Sprachsignale sind ebenfalls seit langer Zeit bekannt. Ein solches Auswertegerät wurde beispielsweise von der Anmelderin unter der Typennummer LFH 0304 in den Handel gebracht. Solche Auswertegeräte sind sogenannte Tischgeräte, bei denen im Auswertebetrieb, der funktionell eine andere Betriebsweise darstellt, als sie beim Aufnehmen von Diktaten vorliegt, die Betriebsarten des Gerätes auf ferngesteuerte Weise mittels eines Fußschalters eingeschaltet werden. Ein Aufnehmen von Diktaten ist mit solchen Auswertegeräten nicht möglich.

Die Erfindung hat sich nun zur Aufgabe gestellt, ein Taschendiktiergerät der im eingangs angeführten Absatz angegebenen Gattung so weiterzubilden, daß die vorstehend erläuterte Einschränkung hinsichtlich der Betriebsmöglichkeiten, wie sie bei bekannten Taschendiktiergeräten vorliegt, und der vorstehend angeführte Zusatzaufwand zum Auswerten von mit Hilfe von bekannten Taschendiktiergeräten aufgenommenen Diktaten vermieden sind und mit minimalem Zusatzaufwand ein in seinen Betriebsmöglichkeiten erweitertes Taschendiktiergerät erhalten wird.

Zur Lösung dieser Aufgabe ist erfindungsgemäß vorgesehen, daß das Taschendiktiergerät zusätzlich zu der Betriebsweise zum Aufnehmen von Diktaten, in der das Taschendiktiergerät in einer Hand gehalten wird und seine Betriebsarten mit mindestens einer Handhabe einschaltbar sind, auch noch in einer zweiten Betriebsweise zum Auswerten von Diktaten betreibbar ist, in der die Betriebsarten des Taschendiktiergerätes anstelle mit mindestens einer Handhabe mit einer Steuereinrichtung einschaltbar sind, auf die von einer vom Taschendiktiergerät entfernten Stelle von einem Benützer des Taschendiktiergerätes einwirkbar ist und mit der zumindest ein Vorwärts-Steuersignal und ein Rückwärts-Steuersignal auslösar sind, und daß hiebei das Taschendiktiergerät eine Steuerschaltung aufweist, der das Vorwärts-Steuersignal und das Rückwärts-Steuersignal zuführbar sind und mit der so wie in der ersten Betriebsweise zum Aufnehmen von Diktaten mit der betreffenden Handhabe in der zweiten Betriebsweise zum Auswerten von Diktaten in Abhängigkeit von den beiden mit der Steuereinrichtung auslösbaren Steuersignalen ferngesteuert die Vorwärts-Betriebsart und die Rückwärts-Betriebsart einschaltbar sind.

Hiedurch ist vorteilhafterweise mit sehr einfachen Mitteln erreicht, daß ein erfindungsgemäßes Taschendiktiergerät nicht nur in einer ersten Betriebsweise zum Aufnehmen von Diktaten betreibbar ist, in der das Taschendiktiergerät in einer Hand gehalten wird und in der seine Betriebsarten, die zum Aufnehmen von Diktaten erforderlich sind und in denen ein Speichern und ein Wiedergeben von Sprachsignalen erfolgt, von Hand aus mit der betreffenden Handhabe durch Betätigen dieser Handhabe einschaltbar sind, sondern es ist das Taschendiktiergerät zusätzlich auch noch in einer zweiten Betriebsweise zum Auswerten von Diktaten betreibbar ist, in der das Taschendiktiergerät nicht in der Hand gehalten werden muß und in der seine Betriebsarten, die zum Auswerten von zuvor aufgenommenen Diktaten erforderlich sind, also die Vorwärts-Betriebsart und auch die Rückwärts-Betriebsart, mit einer Steuereinrichtung, auf die von einer vom Taschendiktiergerät entfernten Stelle von einem Benützer des Taschendiktiergerätes einwirkbar ist, auf ferngesteuerte Weise einschaltbar sind. Es wird so der große Vorteil erzielt, daß ein kleines handliches Taschendiktiergerät, das beim Aufnehmen von Diktaten in der Hand gehalten wird, nach dem erfolgten Aufnehmen der Diktate einfach einer Schreibkraft übergeben werden kann, ohne den Speicher für die den Diktaten entsprechenden Sprachsignale - wie ein in einer Kassette untergebrachtes Magnetband oder eine zum Einspeichern und Wiedergeben von Sprachsignalen auf elektrooptische Weise geeignete plattenförmige Speicherscheibe oder ein Festkörperspeicher, wie ein Halbleiterspeicher, der in eine aus dem Gerät entnehmbare Trägerkarte eingebettet ist, - aus dem Taschendiktiergerät entnehmen zu müssen, wonach die Schreibkraft mit Hilfe der mit dem erfindungsgemäßen Taschendiktiergerät zusammenwirkenden Steuereinrichtung das Taschendiktiergerät zum Auswerten der zuvor von einem Diktierenden diktierten und aufgenommenen Diktate auf ferngesteuerte Weise steuern kann. Auf diese Weise kann eine Schreibkraft, ohne hiefür ein separates Auswertegerät zu benötigen, mit dem erfindungsgemäßen Taschendiktiergerät ein Auswerten der aufgenommenen Diktate, also ein Niederschreiben des Diktatinhaltes, vornehmen. Es ist somit erreicht, daß ein kleines handliches Taschendiktiergerät nicht nur ein Aufnahmegerät, sondern zusätzlich auch ein Auswertegerät bildet und damit die Funktionen eines sogenannten Volldiktiergerätes erfüllt. Da ein erfindungsgemäßes kleines handliches Taschendiktiergerät aufgrund seiner Kleinheit, seines geringen Gewichtes, seiner netzunabhängig möglichen Energieversorgung und seiner einfachen und unbehinderten Handhabbarkeit von einem Diktierenden nach Vollendung des Aufnehmens eines Diktates an einem Diktierarbeitsplatz sehr leicht an eine Schreibkraft zum Auswerten des Diktates an einem Auswertearbeitsplatz, der von dem Diktierarbeitsplatz entfernt liegt, weitergegeben werden kann, ist mit einem erfindungsgemäßen Taschendiktiergerät, das die Funktionen eines Volldiktiergerätes erfüllt, vorteilhafterweise erreicht, daß ein solches Taschendiktiergerät auch tatsächlich sowohl von einem Diktierenden zum Aufnehmen von Diktaten als auch von einem Auswertenden zum Auswerten von Diktaten verwendet wird. Weiters ist hiedurch ein Taschendiktiergerät realisierbar, bei dem ein günstigerweise fix in das Gerät eingebauter Speicher zum Einsatz kommen kann und das trotz des fix eingebauten und folglich nicht aus dem Gerät entnehmbaren und in ein separates Auswertegerät einsetzbaren Speichers ein vollwertiges Auswertegerät bildet.

Es kann erwähnt werden, daß seit vielen Jahren Volldiktiergeräte bekannt sind, die als große Tischgeräte ausgebildet sind und demgemäß beim Aufnahmebetrieb nicht in einer Hand gehalten werden können, sondern auf einer Abstellfläche abgestellt werden müssen, und deren Betriebsarten in einer ersten Betriebsweise zum Aufnehmen von Diktaten mit Tasten, die an einer als Fernsteuermikrofon ausgebildeten Steuereinrichtung vorgesehen sind, und mit am Gerät selbst vorgesehenen, händisch betätigbaren Tasten und in einer zweiten Betriebsweise zum Auswerten von Diktaten mit Schaltern einer als Fußschalter ausgebildeten Steuereinrichtung einschaltbar sind. Ein solches Volldiktiergerät für in Kassetten untergebrachte Magnetbänder als Speicher für die den Diktaten entsprechenden Sprachsignale wurde beispielsweise von der Anmelderin unter der Typennummer LFH 0302 in den Handel gebracht. Alle als große Tischdiktiergeräte ausgebildeten Volldiktiergeräte bieten an sich die Möglichkeit nicht nur als Aufnahmegeräte, sondern auch als Auswertegeräte verwendet werden zu können. Diese Möglichkeit wird aber in der Praxis praktisch niemals ausgenützt, und zwar wegen der Größe, des relativ großen Gewichtes, des Netzanschlusses, der an einen Aufstellungsort gebundenen Betreibbarkeit und der unbequemen und unpraktischen Transportierbarkeit dieser Volldiktiergeräte, da diese Gegebenheiten für einen einfachen und raschen Ortswechsel von solchen Volldiktiergeräten hinderlich sind. Darin ist auch der Grund dafür zu sehen, daß in der Praxis beim Diktierenden stets entweder ein als Tischgerät ausgebildetes separates Volldiktiergerät oder ein separates Taschendiktiergerät oder auch beide vorhanden sind und beim Auswertenden stets ein als Tischgerät ausgebildetes separates Auswertegerät zusätzlich vorhanden ist. Demgegenüber kann ein kleines handliches Taschendiktiergerät einfach und unbehindert einem raschen Ortswechsel unterzogen werden, so daß ein erfindungsgemäßes Taschendiktiergerät, das ein Volldiktiergerät bildet, im Gegensatz zu den bekannten Tischdiktiergeräten, die Volldiktiergeräte bilden, sehr wohl zum Aufnehmen von Diktaten und zusätzlich zum Auswerten von Diktaten verwendet werden kann.

Es kann ferner erwähnt werden, daß aus der EP 0 350 269 A2 ein Magnetband-Aufzeichnungs- und/oder Wiedergabegerät bekannt ist, das ebenfalls relativ klein und handlich ausgebildet ist und bei dem mit am Gerät vorgesehenen Tasten mehrere Betriebsarten einschaltbar sind und das zum Zusammenwirken mit einer an einer von diesem Gerät entfernten Stelle betätigbaren Steuereinrichtung ausgebildet ist. Dabei ist aber die Ausbildung sowohl des Gerätes als auch der Steuereinrichtung so getroffen, daß mit der Steuereinrichtung in dem Gerät nur die Vorwärts-Betriebsart ein- bzw. ausschaltbar ist, so daß den Erfordernissen eines Auswertebetriebes nicht entsprochen ist, weil beim Auswerten von zuvor aufgenommenen Diktaten zur Ermöglichung der Wiederholung von Diktatabschnitten unbedingt das ferngesteuerte Einschalten der Rückwärts-Betriebsart möglich sein muß.

Die Steuereinrichtung, auf die von einer vom Taschendiktiergerät entfernten Stelle einwirkbar ist, kann beispielsweise durch eine Ultraschall-Fernbedienungseinrichtung, wobei dann die Fernsteuereinrichtung selbst und auch der Ort des Einwirkens auf dieselbe an einer vom Taschendiktiergerät entfernten Stelle liegen, oder auch durch eine sprachgesteuerte Steuereinrichtung gebildet sein, wobei bei letzterer das Einwirken auf dieselbe von einer vom Taschendiktiergerät entfernten Stelle her erfolgt, nämlich vom Ort des Mundes der die Steuersprachsignale aussprechenden, die Diktate auswertenden Person, jedoch die Steuereinrichtung selbst sich innerhalb des Taschendiktiergerätes befinden kann. Als besonders vorteilhaft hat sich erwiesen, wenn das Taschendiktiergerät zum Zusammenwirken mit einer durch einen Fußschalter mit einem mit einem Stecker abgeschlossenen Anschlußkabel gebildeten Steuereinrichtung ausgebildet ist, dessen Anschlußkabel und Stecker zum Weiterleiten des Vorwärts-Steuersignales und des Rückwärts-Steuersignales ausgebildet sind, und das Taschendiktiergerät zum Anstecken des das Anschlußkabel des Fußschalters abschließenden Steckers eine Buchse aufweist, die ebenfalls zum Weiterleiten des Vorwärts-Steuersignales und des Rückwärts-Steuersignales ausgebildet ist. Diese an sich bekannte Maßnahme hat sich auch bei einem erfindungsgemäßen Taschendiktiergerät wegen der besonderen Einfachheit als vorteilhaft erwiesen.

Als Speicher für die den aufgenommenen Diktaten entsprechenden Sprachsignale kann in den hiefür vorgesehenen Aufnahmeraum des Taschendiktiergerätes beispielsweise eine auf magnetische Weise oder eine auf elektrooptische Weise beschreibbare und abtastbare, rotierend antreibbare Speicherplatte oder auch ein in eine Trägerkarte eingebetteter Halbleiterspeicher einsetzbar sein oder auch ein fix in dem Aufnahmeraum untergebrachter Halbleiterspeicher vorgesehen sein. Zumindest bei Verwendung eines Halbleiterspeichers werden die zu speichernden Sprachsignale in bekannter Weise vor ihrer Speicherung einer Analog/Digital-Umwandlung unterzogen und in digitaler Form in dem Halbleiterspeicher gespeichert.

Die Erfindung ist ebenso vorteilhaft einsetzbar bei einem Taschendiktiergerät, dessen Aufnahmeraum zum Aufnehmen einer Kassette ausgebildet ist, die als Speicher ein Magnetband enthält, das zwischen zwei nebeneinanderliegenden, rotierend antreibbaren Wickelkernen verläuft, von denen der eine einen Vorwärts-Wickelkern und der andere einen Rückwärts-Wickelkern bildet, und das zwei in den Aufnahmeraum ragende, zum rotierenden Antreiben der beiden Wickelkerne vorgesehene Wickeldorne aufweist, von denen der eine ein Vorwärts-Wickeldorn und der andere ein Rückwärts-Wickeldorn ist und die beide je mit mindestens einem koaxialen Antriebsrad drehfest verbunden sind, und das mit einer Antriebseinrichtung für die beiden Wickeldorne versehen ist, die einen Motor und einen von einer zumindest zwischen mindestens einer Vorwärts-Betriebslage und mindestens einer Rückwärts-Betriebslage verstellbaren Trageinrichtung getragenen Antriebsmechanismus aufweist, der mindestens ein von dem Motor rotierend antreibbares Zwischenrad aufweist und von dem bei in eine Vorwärts-Betriebslage verstellter Trageinrichtung über das mit dem Vorwärts-Wickeldorn koaxial verbundene Antriebsrad der Vorwärts-Wickeldorn zum Fortbewegen des Magnetbandes in einer Vorwärts-Laufrichtung und von dem bei in eine Rückwärts-Betriebslage verstellter Trageinrichtung über das mit dem Rückwärts-Wickeldorn koaxial verbundene Antriebsrad der Rückwärts-Wickeldorn zum Fortbewegen des Magnetbandes in einer Rückwärts-Laufrichtung antreibbar ist, und das eine einerseits mit der mindestens einen Handhabe und andererseits mit der Trageinrichtung für den Antriebsmechanismus zusammenwirkende Verstelleinrichtung aufweist, über die in der ersten Betriebsweise durch die händische Verstellung der betreffenden Handhabe in ihre Vorwärts-Einschaltposition die Trageinrichtung für den Antriebsmechanismus rein mechanisch zu mindestens einer Vorwärts-Betriebslage hin und über die in der ersten Betriebsweise durch die händische Verstellung der betreffenden Handhabe in ihre Rückwärts-Einschaltposition die Trageinrichtung für den Antriebsmechanismus rein mechanisch zu mindestens einer Rückwärts-Betriebslage hin verstellbar ist.

Auch solche Taschendiktiergeräte sind seit langem bekannt. Beispielsweise handelt es sich auch bei dem bereits eingangs angeführten, von der Anmelderin unter der Typennummer LFH 0195 in den Handel gebrachten Taschendiktiergerät um ein solches Taschendiktiergerät der im vorstehend angeführten Absatz angegebenen Gattung.

Bei einem solchen Taschendiktiergerät ist erfindungsgemäß vorgesehen, daß der Antriebsmechanismus, der von der in der ersten Betriebsweise durch die händische Verstellung der betreffenden Handhabe über die Verstelleinrichtung rein mechanisch verstellbaren Trageinrichtung getragen ist, in Abhängigkeit von den beiden in der zweiten Betriebsweise mit der Steuereinrichtung ausgelösten und der Steuerschaltung zugeführten Steuersignalen ferngesteuert zumindest in einem Teilbereich des Antriebsmechanismus elektromechanisch verstellbar ausgebildet ist und daß in der zweiten Betriebsweise bei in Abhängigkeit von dem Vorwärts-Steuersignal elektromechanisch verstelltem Antriebsmechanismus dieser Antriebsmechanismus den Vorwärts-Wickeldorn und bei in Abhängigkeit von dem Rückwärts-Steuersignal elektromechanisch verstelltem Antriebsmechanismus dieser Antriebsmechanismus den Rückwärts-Wickeldorn antreibt. Auf diese Weise ist erreicht, daß der Antriebsmechanismus, der von der in der ersten Betriebsweise des Taschendiktiergerätes auf rein mechanische Weise verstellbaren Trageinrichtung getragen ist, zumindest in einem Teilbereich desselben vorteilhafterweise in der zweiten Betriebsweise des Taschendiktiergerätes zusätzlich auf elektromechanische Weise verstellbar ist, wodurch der Antriebsmechanismus zumindest in einem erforderlichen Teilbereich desselben in der ersten Betriebsweise auf handgesteuerte Weise und in der zweiten Betriebsweise auf ferngesteuerte Weise verstellbar ist, um in der ersten Betriebsweise ein übliches Aufnehmen von Diktaten und in der zweiten Betriebsweise ein übliches Auswerten von Diktaten durchführen zu können.

Bei einem solchen erfindungsgemäßen Taschendiktiergerät kann das elektromechanische Verstellen des Antriebsmechanismus zumindest in einem Teilbereich desselben in der zweiten Betriebsweise beispielsweise mittels mindestens eines Elektromagneten oder mittels eines einen separaten Steuermotor aufweisenden Servomechanismus erfolgen, wobei eine Verstellung nur eines Teilbereiches des Antriebsmechanismus oder durch Verstellung der Trageinrichtung eine Verstellung des gesamten Antriebsmechanismus auf elektromechanische Weise vorgenommen werden kann. Bei einem solchen erfindungsgemäßen Taschendiktiergerät, dessen Antriebseinrichtung einen in seiner Drehrichtung umschaltbaren Motor aufweist, der in einer Vorwärts-Drehrichtung und in einer zur Vorwärts-Drehrichtung entgegengesetzten Rückwärts-Drehrichtung einschaltbar ist, wie dies beispielsweise aus dem bereits eingangs angeführten Taschendiktiergerät der Anmelderin mit der Typennummer LFH 0195 bekannt ist, hat sich als besonders vorteilhaft erwiesen, wenn der Motor in der zweiten Betriebsweise in Abhängigkeit von den beiden mit der Steuereinrichtung ausgelösten und der Steuerschaltung zugeführten Steuersignalen ferngesteuert in seiner Vorwärts-Drehrichtung und in seiner Rückwärts-Drehrichtung einschaltbar ist und der Antriebsmechanismus, der von der in der ersten Betriebsweise durch die händische Verstellung der betreffenden Handhabe über die Verstelleinrichtung rein mechanisch verstellbaren Trageinrichtung getragen ist und der mindestens ein von dem Motor antreibbares Zwischenrad aufweist, zumindest in einem Teilbereich des Antriebsmechanismus in Abhängigkeit von der in der zweiten Betriebsweise ferngesteuert eingeschalteten Drehrichtung des Motors und der Drehrichtung des von dem Motor antreibbaren Zwischenrades elektromechanisch verstellbar ausgebildet ist. Auf diese Weise ist erreicht, daß ohne einen Elektromagneten oder einen Servomechanismus das Auslangen gefunden wird und die elektromechanische Verstellung des Antriebsmechanismus zumindest in einem Teilbereich desselben unter zusätzlicher Ausnützung des ohnehin vorhandenen Motors durch entsprechende Drehrichtungswahl dieses Motors erfolgt.

Es kann erwähnt werden, daß die Maßnahme, einen Antriebsmechanismus zumindest in einem Teilbereich desselben in Abhängigkeit von der Drehrichtung eines den Antriebsmechanismus antreibenden Motors zu verstellen, an sich bekannt ist. Es ist jedoch nicht bekannt, einen Antriebsmechanismus, der einerseits von einer von einer Handhabe her auf rein mechanische Weise verstellbaren Trageinrichtung getragen ist, andererseits zumindest in einem Teilbereich desselben zusätzlich in Abhängigkeit von der Drehrichtung eines Motors auf elektromechanische Weise zu verstellen.

Bei einem solchen erfindungsgemäßen Taschendiktiergerät hat sich als besonders vorteilhaft erwiesen, wenn bei in der ersten Betriebsweise durch die händische Verstellung der betreffenden Handhabe in ihre Vorwärts-Einschaltposition über die Verstelleinrichtung rein mechanisch zu einer Vorwärts-Betriebslage hin verstellter Trageinrichtung der von der Trageinrichtung getragene Antriebsmechanismus zusätzlich auch in der ersten Betriebsweise in Abhängigkeit von der durch die in ihre Vorwärts-Einschaltposition verstellten Handhabe eingeschalteten Vorwärts-Drehrichtung des Motors zumindest in einem Teilbereich des Antriebsmechanismus elektromechanisch verstellbar ist, wobei der Antriebsmechanismus nach einer solchen elektromechanischen Verstellung desselben in der ersten Betriebsweise über das mit dem Vorwärts-Wickeldorn koaxial verbundene Antriebsrad den Vorwärts-Wickeldorn antreibt. Auf diese Weise wird die zumindest in einem Teilbereich des Antriebsmechanismus gegebene elektromechanische Verstellbarkeit nicht nur in der zweiten Betriebsweise, sondern vorteilhafterweise auch in der ersten Betriebsweise des Taschendiktiergerätes ausgenützt, was im Hinblick auf einen möglichst kleinen Verstellhub und eine möglichst kleine Verstellkraft für die betreffende Handhabe und die von dieser verstellbare Verstelleinrichtung als auch die Trageinrichtung für den Antriebsmechanismus vorteilhaft ist.

Weiters hat sich bei einem solchen erfindungsgemäßen Taschendiktiergerät als besonders vorteilhaft erwiesen, wenn die Trageinrichtung zusätzlich zur ersten Betriebsweise auch in der zweiten Betriebsweise durch die händische Verstellung der betreffenden Handhabe in ihre Vorwärts-Einschaltposition über die Verstelleinrichtung rein mechanisch zumindest zu einer Vorwärts-Betriebslage hin verstellbar ist und mindestens ein von Hand aus umschaltbarer Präventivschalter vorgesehen ist, mit dem durch sein Umschalten in der zweiten Betriebsweise dem Einschalten der Vorwärts-Betriebsart durch die händische Verstellung der betreffenden Handhabe in ihre Vorwärts-Einschaltposition vorbeugbar ist. Dadurch, daß die Trageinrichtung für den Antriebsmechanismus nicht nur in der ersten Betriebsweise, sondern auch in der zweiten Betriebsweise zu einer Vorwärts-Betriebslage hin verstellt wird, wird vorteilhafterweise mit einem relativ kleinen Verstellhub bei der elektromechanischen Verstellung des Antriebsmechanismus zumindest in einem Teilbereich desselben das Auslangen gefunden. Hiebei wird durch das Umschalten des Präventivschalters in der zweiten Betriebsweise verhindert, daß die Vorwärts-Betriebsart durch die händische Verstellung der betreffenden Handhabe in ihre Vorwärts-Einschaltposition im Taschendiktiergerät tatsächlich eingeschaltet wird, weil das tatsächliche Einschalten der Betriebsarten des Taschendiktiergerätes in der zweiten Betriebsweise nur von der Fernsteuereinrichtung her erfolgen soll.

Die Trageinrichtung für den Antriebsmechanismus kann in bekannter Weise aus einer Ruhelage in entgegengesetzten Verstellrichtungen in ihre Betriebslagen verstellbar sein. Als vorteilhaft hat sich aber erwiesen, wenn die Trageinrichtung für den Antriebsmechanismus in einer Ruhelage derselben positionierbar und aus der Ruhelage heraus in nur einer Verstellrichtung zu ihren Betriebslagen hin verstellbar ist. Dies ist im Hinblick auf eine einfache Festlegung der Ruhelage der Trageinrichtung und auf eine einfache Verstellung der Trageinrichtung vorteilhaft.

Hinsichtlich eines von der rein mechanisch aus einer Ruhelage in nur einer Verstellrichtung zu ihren Betriebslagen hin verstellbaren, in beiden Betriebsweisen rein mechanisch zumindest zu einer Vorwärts-Betriebslage hin verstellbaren Trageinrichtung getragenen, in beiden Betriebsweisen zumindest in einem Teilbereich in Abhängigkeit von der eingeschalteten Motordrehrichtung elektromechanisch verstellbaren Antriebsmechanismus hat sich als besonders vorteilhaft erwiesen, wenn der Antriebsmechanismus, der von der rein mechanisch aus einer Ruhelage in nur einer Verstellrichtung zu ihren Betriebslagen hin verstellbaren, in beiden Betriebsweisen rein mechanisch zumindest zu einer Vorwärts-Betriebslage hin verstellbaren Trageinrichtung getragen ist und der in beiden Betriebsweisen zumindest in einem Teilbereich des Antriebsmechanismus in Abhängigkeit von der eingeschalteten Drehrichtung des Motors elektromechanisch verstellbar ist, eine auf der verstellbaren Trageinrichtung drehbar gelagerte Antriebswelle, mit der das vom Motor rotierend antreibbare Zwischenrad koaxial und drehfest verbunden ist, und ein mit der Antriebswelle koaxial und drehfest verbundenes Zwischen-Zahnrad, mit dem in der ersten Betriebsweise bei durch die händische Verstellung der betreffenden Handhabe in ihre Rückwärts-Einschaltposition über die Verstelleinrichtung zu einer Rückwärts-Betriebslage hin verstellter Trageinrichtung für den Antriebsmechanismus und von der in ihre Rückwärts-Einschaltposition verstellten Handhabe in seiner Vorwärts-Drehrichtung eingeschaltetem Motor ein als mit dem Rückwärts-Wickeldorn koaxial verbundenes Antriebsrad vorgesehenes Rückwärts-Zahnrad antreibbar ist, und ein einen elektromechanisch verstellbaren Teilbereich des Antriebsmechanismus bildendes, in Abhängigkeit von seiner Drehrichtung verstellbares Zwischen-Reibrad aufweist, das an einem um die Antriebswelle verschwenkbaren Reibradträger drehbar gelagert und an die Antriebswelle angedrückt gehalten und von derselben reibungsschlüssig antreibbar ist und mit dem in der ersten Betriebsweise bei durch die händische Verstellung der betreffenden Handhabe in ihre Vorwärts-Einschaltposition über die Verstelleinrichtung zu einer Vorwärts-Betriebslage hin verstellter Trageinrichtung für den Antriebsmechanismus und von der in ihre Vorwärts-Einschaltposition verstellten Handhabe in seiner Vorwärts-Drehrichtung eingeschaltetem Motor und in der zweiten Betriebsweise bei durch die händische Verstellung der betreffenden Handhabe in ihre Vorwärts-Einschaltposition über die Verstelleinrichtung zu einer Vorwärts-Betriebslage hin verstellter Trageinrichtung und über die Steuerschaltung in seiner Vorwärts-Drehrichtung ferngesteuert eingeschaltetem Motor ein als mit dem Vorwärts-Wickeldorn koaxial verbundenes Antriebsrad vorgesehenes Vorwärts-Reibrad antreibbar ist und mit dem in der zweiten Betriebsweise bei durch die händische Verstellung der betreffenden Handhabe in ihre Vorwärts-Einschaltposition über die Verstelleinrichtung zu einer Rückwärts-Betriebslage hin verstellter Trageinrichtung und über die Steuerschaltung in seiner Rückwärts-Drehrichtung ferngesteuert eingeschaltetem Motor ein mit dem Rückwärts-Wickeldorn koaxial verbundenes Rückwärts-Reibrad antreibbar ist und das in der ersten Betriebsweise bei durch die händische Verstellung der betreffenden Handhabe in ihre Rückwärts-Einschaltposition über die Verstelleinrichtung zu einer Rückwärts-Betriebslage hin verstellter Trageinrichtung für den Antriebsmechanismus und von der in ihre Rückwärts-Einschaltposition verstellten Handhabe in seiner Vorwärts-Drehrichtung eingeschaltetem Motor mit separaten Blockiermitteln außer Antriebsverbindung von dem Vorwärts-Reibrad gehalten ist. Hiedurch ist eine besonders einfache, sehr kompakte und betriebssichere Ausbildung erhalten.

Bezüglich der Lagerung und Halterung des Zwischen-Reibrades hat sich als besonders vorteilhaft erwiesen, wenn der Reibradträger durch einen um eine Schwenkachse verschwenkbaren Hebel gebildet ist, dessen Schwenkachse parallel zur Antriebswelle verläuft, ein um die Antriebswelle verschwenkbarer Zwischenträger für den Reibradträger vorgesehen ist, an dem der Reibradträger schwenkbar gelagert ist, und an dem Zwischenträger und an dem Reibradträger eine diese beiden Träger gegeneinander verspannende Feder angreift, die die Andruckkraft bestimmt, mit der das an dem Reibradträger drehbar gelagerte Zwischen-Reibrad gegen die Antriebswelle gedrückt gehalten ist. Auch dies ist hinsichtlich einer kompakten Ausbildung und zusätzlich hinsichtlich einer durch die Wahl der Federausbildung genau festlegbaren Andruckkraft, mit der das Zwischen-Reibrad an die Antriebswelle angedrückt wird, vorteilhaft.

Bei einem solchen Antriebsmechanismus hat sich als sehr vorteilhaft erwiesen, wenn die separaten Blockiermittel zum Außer-Antriebsverbindung-Halten des Zwischen-Reibrades von dem Vorwärts-Reibrad durch einen Verstellfortsatz der Verstelleinrichtung gebildet sind, der zum Zusammenwirken mit dem Zwischenträger für den Reibradträger ausgebildet ist. Auch dies ist hinsichtlich einer sehr einfachen Ausbildung vorteilhaft.

Hinsichtlich des als Reibradträger vorgesehenen Hebels hat sich als sehr vorteilhaft erwiesen, wenn der als Reibradträger vorgesehene Hebel rahmenförmig ausgebildet ist und zwei quer zur Antriebswelle verlaufende Hebelabschnitte aufweist, in denen je ein mit dem Zwischen-Reibrad verbundener Wellenstummel zur zweifachen Lagerung des Zwischen-Reibrades drehbar gelagert ist. Dies ist im Hinblick auf eine stabile und über eine lange Lebensdauer gleichbleibend gute Lagerung des Zwischen-Reibrades vorteilhaft.

Die verstellbare Trageinrichtung für den Antriebsmechanismus kann als verschiebbar geführter Schieber oder auch als einfacher verschwenkbarer Hebel ausgebildet sein. Als besonders vorteilhaft hat sich erwiesen, wenn die verstellbare Trageinrichtung für den Antriebsmechanismus durch einen um eine Schwenkachse verschwenkbaren Hebel gebildet ist, dessen Schwenkachse parallel zur Antriebswelle des Antriebsmechanismus verläuft und der rahmenförmig ausgebildet ist und zwei quer zur Antriebswelle verlaufende Hebelabschnitte aufweist, in denen die Antriebswelle zur zweifachen Lagerung derselben je drehbar gelagert ist. Dies ist im Hinblick auf eine genaue, stabile und über eine lange Lebensdauer gleichbleibend gute Lagerung der Antriebswelle vorteilhaft.

Hinsichtlich des Antriebes des von dem Motor antreibbaren Zwischenrades hat sich als besonders vorteilhaft erwiesen, wenn das von dem Motor antreibbare Zwischenrad des Antriebsmechanismus als Pesenrad ausgebildet ist, mit der Welle des Motors ein weiteres Pesenrad drehfest verbunden ist und die beiden Pesenräder mit einer um die beiden Pesenräder geschlungenen Pese antriebsmäßig verbunden sind. Dies ist im Hinblick auf einen unabhängig von der Lage des Antriebsmechanismus praktisch stets gleich guten Antrieb des Zwischenrades und eine möglichst raumsparende Ausbildung vorteilhaft.

Bei einem Taschendiktiergerät mit einer in ihrer Ruhelage positionierten, aus dieser in nur einer Verstellrichtung verstellbaren Trageinrichtung und einem über eine Pese angetriebenen Zwischenrad des Antriebsmechanismus hat sich als besonders vorteilhaft erwiesen, wenn zu der in ihrer Ruhelage positionierten Trageinrichtung für den Antriebsmechanismus benachbart ein Positionieranschlag vorgesehen ist, an den die Trageinrichtung zur Positionierung in ihrer Ruhelage unter der Zugkraft der Pese angelegt gehalten ist. Hiedurch ist die Ruhelage der Trageinrichtung und mit dieser auch des Antriebsmechanismus auf besonders einfache Weise festgelegt.

Bei einem Taschendiktiergerät mit einem Präventivschalter kann dieser Schalter zum Verhindern des Einschaltens der Vorwärts-Betriebsart durch die händische Verstellung der betreffenden Handhabe in ihre Vorwärts-Einschaltposition durch einen unabhängig betätigbaren separaten Schalter gebildet sein. Ein solcher separater Schalter birgt den Nachteil in sich, daß, wenn auf das Umschalten dieses Schalters vergessen wird, ein ungewolltes Einschalten der Vorwärts-Betriebsart erfolgen kann. Es hat sich daher als besonders vorteilhaft erwiesen, wenn der von Hand aus umschaltbare Präventivschalter in der zum Anstecken des das Anschlußkabel des Fußschalters abschließenden Steckers vorgesehenen Buchse enthalten ist und beim händischen Anstecken des Steckers zur Ermöglichung der zweiten Betriebsweise der in der Buchse enthaltene Präventivschalter über den Stecker umschaltbar ist. Auf diese Weise ist erreicht, daß das Umschalten des Präventivschaltes vorteilhafterweise automatisch beim Anstecken des Fußschalter-Steckers an die hiefür vorgesehene geräteseitige Buchse erfolgt, also schon bei der Vorbereitung zur Durchführung der zweiten Betriebsweise und nicht erst zu einem späteren Zeitpunkt, zu dem auf ein Umschalten vergessen werden kann.

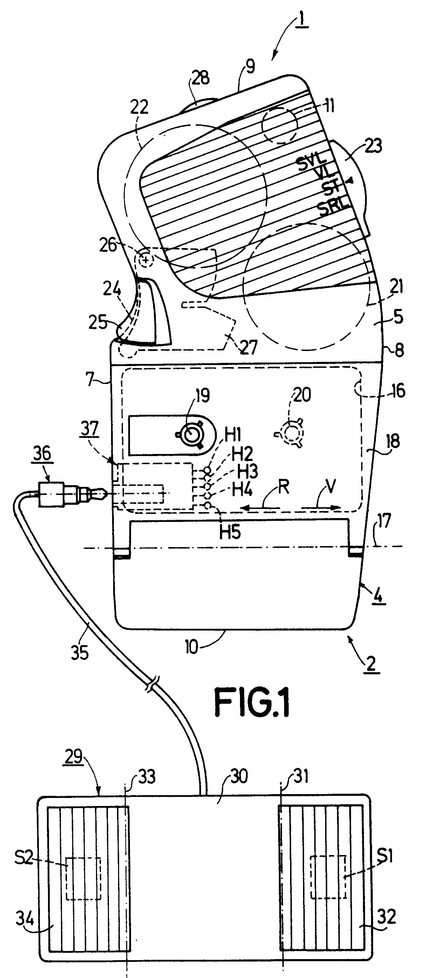

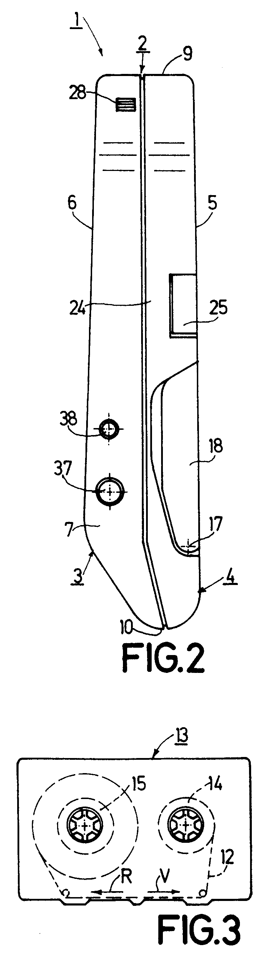

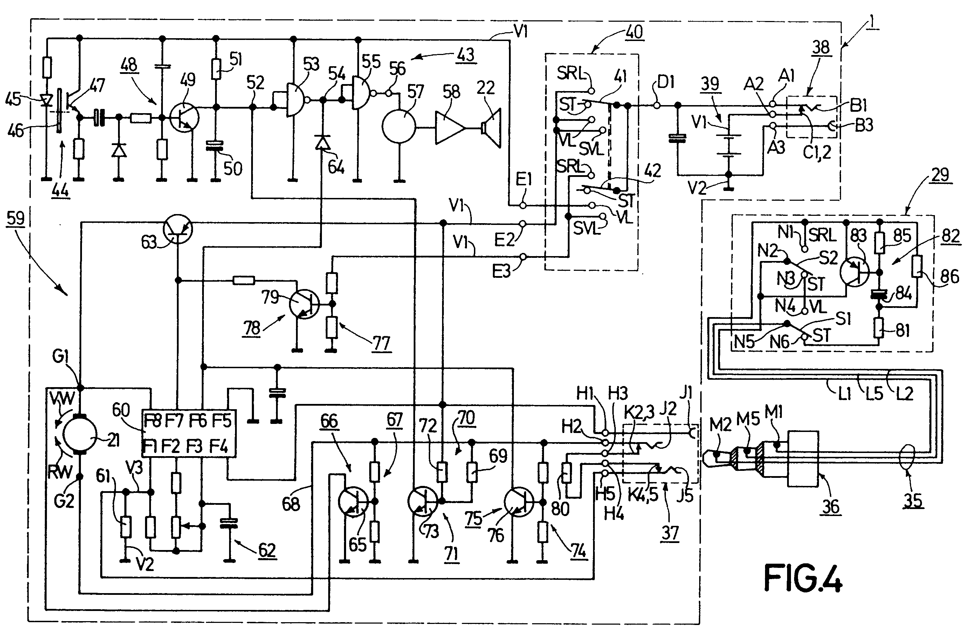

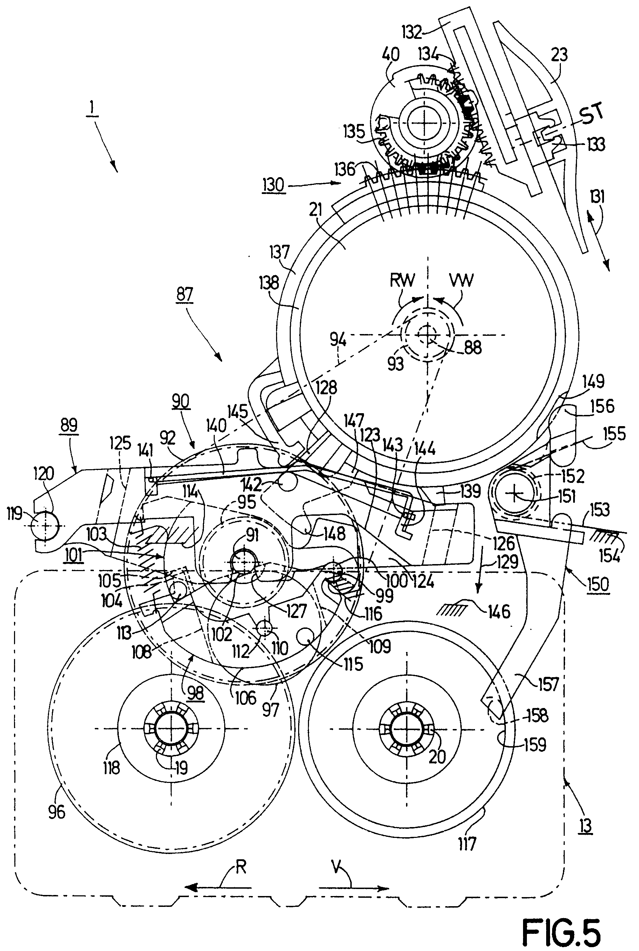

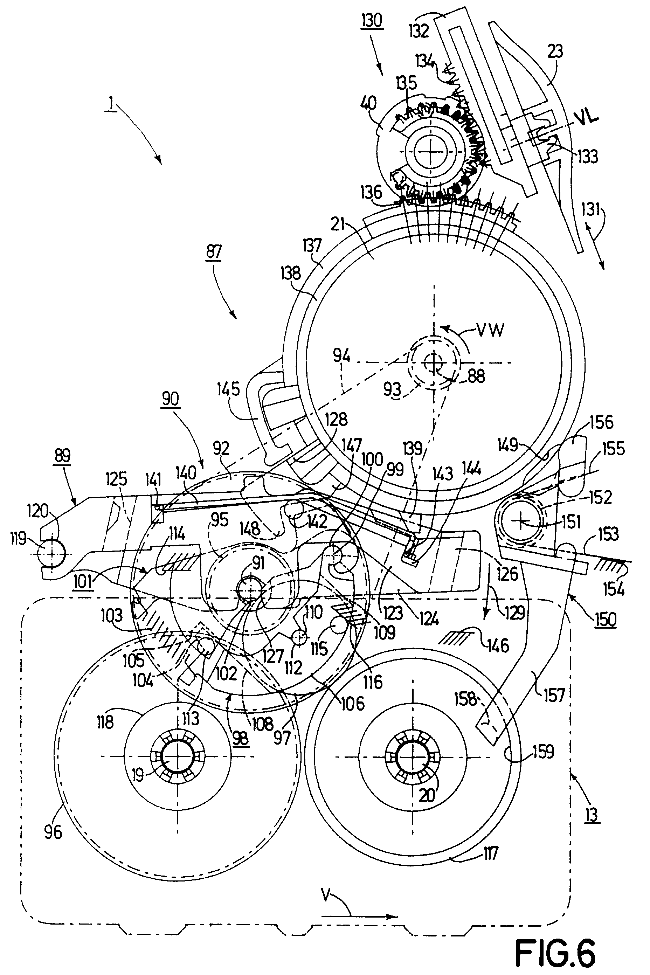

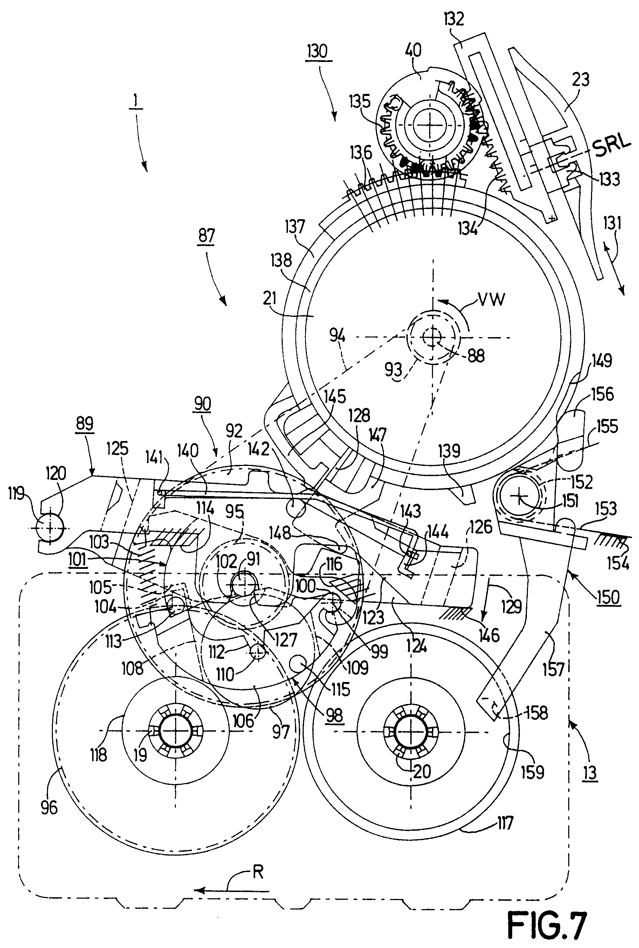

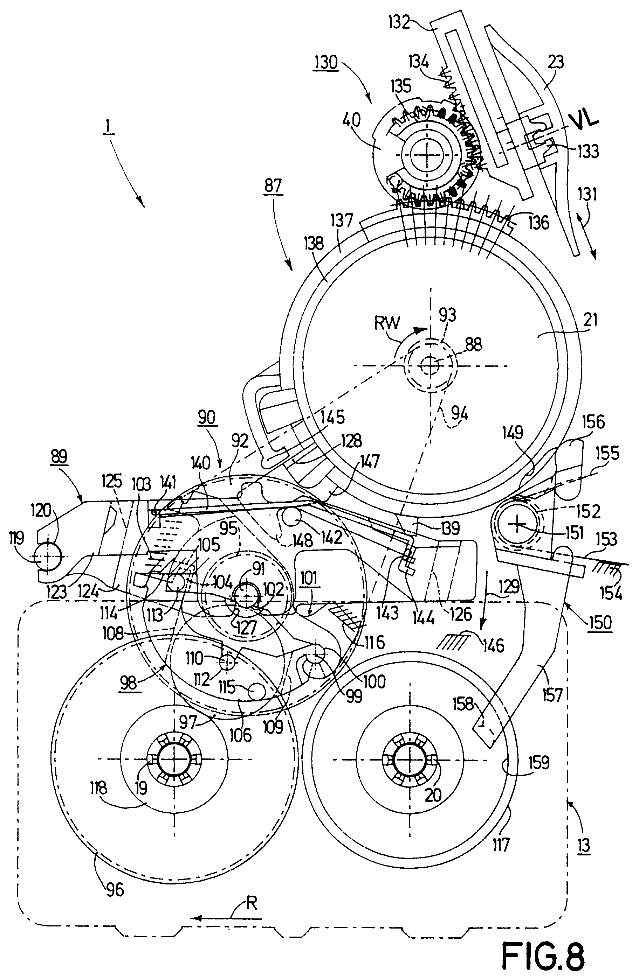

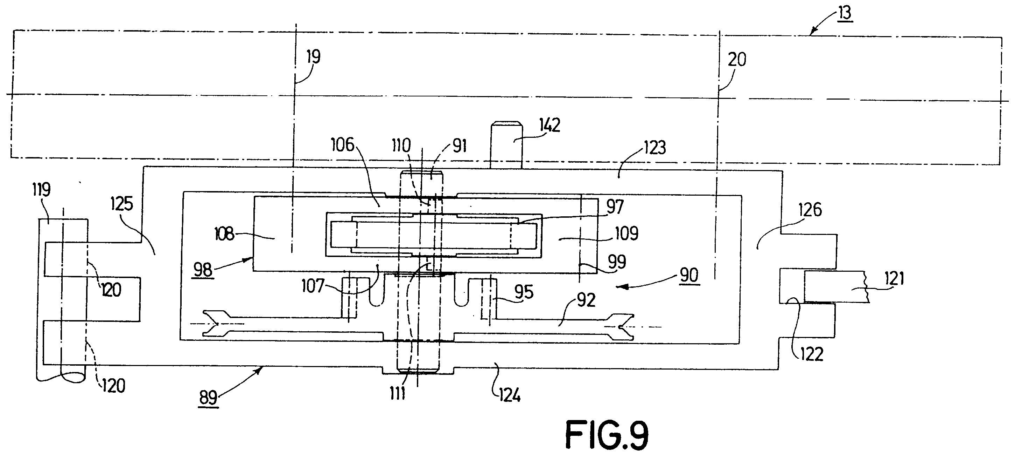

Die Erfindung wird im folgenden anhand eines in den Zeichnungen dargestellten Ausführungsbeispieles näher beschrieben, auf das die Erfindung jedoch nicht beschränkt sein soll. Die Fig. 1 zeigt in etwa natürlicher Größe in Draufsicht ein Taschendiktiergerät gemäß einem Ausführungsbeispiel, das in seiner Betriebsweise zum Aufnehmen von Diktaten in einer Hand gehalten wird und hiebei mit zwei Handhaben steuerbar ist und das in einer zweiten Betriebsweise zum Auswerten von Diktaten nicht in der Hand gehalten werden muß und mit einem in Fig.1 schematisch in verkleinertem Maßstab gegenüber seiner natürlichen Größe dargestellten Fußschalter steuerbar ist, der mittels eines Steckers über eine Buchse an das Taschendiktiergerät elektrisch anschließbar ist. Die Fig.2 zeigt in einer Seitenansicht das Taschendiktiergerät gemäß Fig.1 mit der Buchse zum Anschließen des Fußschalters. Die Fig.3 zeigt in Draufsicht eine zum Einsetzen in das Taschendiktiergerät gemäß den Figuren 1 und 2 vorgesehene Kassette, in der ein zwischen zwei nebeneinanderliegenden Wickelkernen verlaufendes Magnetband als Speicher für die den Diktaten entsprechenden Sprachsignale untergebracht ist. Die Fig.4 zeigt in einem Schaltbild einen Teil der Schaltung des Taschendiktiergerätes gemäß den Figuren 1 und 2 sowie die Schaltung des an dieses Taschendiktiergerät angeschlossenen Fußschalters. Die Fig.5 zeigt in einem gegenüber der natürlichen Größe größeren Maßstab in Draufsicht eine Antriebseinrichtung des Taschendiktiergerätes gemäß den Figuren 1 und 2, wobei eine als Schiebetaste ausgebildete Handhabe des Taschendiktiergerätes ihre Stop-Einschaltposition einnimmt und eine Trageinrichtung für einen in der Antriebseinrichtung enthaltenen Antriebsmechanismus sich in ihrer Ruhelage befindet. Die Fig.6 zeigt analog wie Fig.5 die Antriebseinrichtung gemäß Fig.5, wobei die Handhabe ihre Vorwärts-Einschaltposition einnimmt und die Trageinrichtung für den Antriebsmechanismus sich in einer Vorwärts-Betriebslage befindet und ein Zwischen-Reibrad des Antriebsmechanismus mit einem Vorwärts-Reibrad in Antriebsverbindung steht. Die Fig.7 zeigt analog wie Fig.5 die Antriebseinrichtung gemäß Fig.5, wobei die Handhabe ihre Rückwärts-Einschaltposition einnimmt und die Trageinrichtung für den Antriebsmechanismus sich in einer Rückwärts-Betriebslage befindet und ein Zwischen-Zahnrad des Antriebsmechanismus mit einem Rückwärts-Zahnrad in Eingriff steht. Die Fig.8 zeigt analog wie Fig.5 die Antriebseinrichtung gemäß Fig.5, wobei die Handhabe ihre Vorwärts-Einschaltposition einnimmt und die Trageinrichtung für den Antriebsmechanismus sich in einer weiteren Rückwärts-Betriebslage befindet und das Zwischen-Reibrad des Antriebsmechanismus mit einem Rückwärts-Reibrad in Antriebsverbindung steht. Die Fig.9 zeigt in einer Seitenansicht in einem gegenüber den Figuren 5 bis 8 größeren Maßstab schematisch den Antriebsmechanismus der Antriebseinrichtung gemäß den Figuren 5 bis 8.

Die Fig.1 zeigt ein Taschendiktiergerät 1, das in seiner Betriebsweise zum Aufnehmen von Diktaten in einer Hand gehalten wird. Das Taschendiktiergerät 1 weist ein längliches, leicht abgewinkeltes Gehäuse 2 auf, das aus einer bodenseitigen Gehäusewanne 3 und einer deckenseitigen Gehäusewanne 4 besteht. Die beiden Gehäusewannen 3 und 4 bilden dabei eine Deckenwand 5, eine Bodenwand 6, eine erste Längsseitenwand 7 und eine zweite Längsseitenwand 8 sowie eine erste Querseitenwand 9 und eine zweite Querseitenwand 10.

Das Taschendiktiergerät 1 ist zum Speichern und Wiedergeben von den Diktaten entsprechenden, in einer zeitlichen Aufeinanderfolge auftretenden Sprachsignalen ausgebildet. Zum Umwandeln der Sprachlaute in die zu speichernden Sprachsignale weist das Gerät 1 ein eingebautes Mikrofon 11 auf. Zum Speichern der Sprachsignale in Korrelation zu ihrer zeitlichen Aufeinanderfolge ist in das Taschendiktiergerät 1 ein Speicher 12 einsetzbar. Der Speicher 12 ist im vorliegenden Fall als Magnetband ausgebildet, das in einer Kassette 13 untergebracht ist. In der Kassette 13 sind zwei nebeneinanderliegende, rotierend antreibbare Wickelkerne 14 und 15 drehbar gelagert, zwischen denen das Magnetband 12 verläuft und von denen der eine Wickelkern 14 einen Vorwärts-Wickelkern und der andere Wickelkern 15 einen Rückwärts-Wickelkern bildet.

Zum Aufnehmen der Kassette 13 ist in dem Taschendiktiergerät 1 ein Aufnahmeraum 16 vorgesehen, in den eine Kassette 13 einsetzbar ist und der mittels eines um eine Schwenkachse 17 verschwenkbaren Deckels 18 verschließbar ist. Das Taschendiktiergerät 1 weist zwei zum rotierenden Antreiben der beiden in einer Kassette 13 untergebrachten Wickelkerne 14 und 15 vorgesehene Wickeldorne 19 und 20 auf, die in den Aufnahmeraum 16 hineinragen und die beim Einsetzen einer Kassette 13 in den Aufnahmeraum 16 mit den beiden Wickelkernen 14 und 15 in Antriebsverbindung treten. Zum Antreiben der beiden Wickeldorne 19 und 20 ist das Taschendiktiergerät 1 mit einer in Fig.1 nicht dargestellten Antriebseinrichtung versehen, die einen in Fig.1 schematisch angedeuteten Motor 21 aufweist, von dem her die beiden Wickeldorne 19 und 20 in entgegengesetzten Drehrichtungen antreibbar sind. Von den beiden Wickeldornen ist der Wickeldorn 20 ein Vorwärts-Wickeldorn, über den das Magnetband 12 in einer Vorwärts-Laufrichtung antreibbar ist, die in den Figuren 1, 3, 5 und 6 mit einem Pfeil V angedeutet ist. Der Wickeldorn 19 ist ein Rückwärts-Wickeldorn, über den das Magnetband 12 in einer Rückwärts-Laufrichtung antreibbar ist, die in den Figuren 1, 3, 5, 7 und 8 mit einem Pfeil R angedeutet ist.

Das Taschendiktiergerät 1 ist baulich zum Durchführen einer Vorwärts-Betriebsart, in der das Magnetband 12 in der Vorwärts-Laufrichtung V antreibbar ist, wobei ausgehend von einer Startbandstelle ein Speichern oder Wiedergeben von Sprachsignalen vorgenommen werden kann, und einer Rückwärts-Betriebsart ausgebildet, in der das Magnetband 12 in der Rückwärts-Laufrichtung R antreibbar ist, um nach einem Speichern oder Wiedergeben von Sprachsignalen zu der vorerwähnten Startbandstelle zurückzukehren. Zu dieser baulichen Ausbildung gehört zumindest ein in Fig.1 nicht dargestellter Aufzeichnungs/Wiedergabe-Magnetkopf, der bei in das Taschendiktiergerät 1 eingesetzter Kassette 13 mit dem Magnetband 12 in Abtastverbindung steht. Mit diesem Magnetkopf werden von dem Mikrofon abgegebene und mit einer Aufnahme-Schaltungsanordnung verarbeitete und dem Magnetkopf zugeführte Sprachsignale in Korrelation zu ihrer zeitlichen Aufeinanderfolge auf dem Magnetband 12 gespeichert. Mit diesem Magnetkopf werden auch solche gespeicherte Sprachsignale von dem Magnetband 12 in Korrelation zu ihrer zeitlichen Aufeinanderfolge abgetastet und über eine Wiedergabe-Schaltungsanordnung einem im Taschendiktiergerät 1 eingebauten Lautsprecher 22 zur akustischen Wiedergabe zugeführt. Zu der besagten baulichen Ausbildung gehört auch die bereits erwähnte und nachfolgend noch detailliert beschriebene Antriebseinrichtung, mit der sowohl beim Speichern als auch beim Abtasten, also beim Wiedergeben der Sprachsignale das Magnetband 12 in der Vorwärts-Laufrichtung V an dem Magnetkopf entlangbewegt wird. Um nach einem Speichern oder Wiedergeben eines bestimmten Abschnittes von Sprachsignalen wieder an den Beginn dieses Abschnittes zurückzukehren, wird das Magnetband 12 mit dieser Antriebseinrichtung in der Rückwärts-Laufrichtung R an dem Magnetkopf entlangbewegt.

Das Taschendiktiergerät 1 weist im Bereich seiner zweiten Längsseitenwand 8, und zwar in deren der ersten Querseitenwand 9 zugewandten Abschnitt, eine mit dem Daumen einer Hand betätigbare Handhabe 23 auf. Diese Handhabe 23 ist als Schiebetaste ausgebildet, die in Längsrichtung der zweiten Längsseitenwand 8 verschiebbar geführt ist und die zwischen vier nebeneinanderliegenden Einschaltpositionen verstellbar ist, wobei mit dieser Handhabe in jeder Einschaltposition eine Betriebsart des Taschendiktiergerätes 1 einschaltbar ist. Die aufeinanderfolgenden Einschaltpositionen der Schiebetaste 23 entsprechen in der von der ersten Querseitenwand 9 wegweisenden Richtung aufeinanderfolgend den Betriebsarten "Schneller Vorlauf", "Normaler Vorlauf", "Stop" und "Schneller Rücklauf". Diese Bezeichnungen sind bei Magnetbandgeräten üblich. Bei der Betriebsart "Normaler Vorlauf" handelt es sich um die vorerwähnte Vorwärts-Betriebsart und bei der Betriebsart "Schneller Rücklauf" handelt es sich um die vorerwähnte Rückwärts-Betriebsart. In dem Taschendiktiergerät 1 sind in seiner ersten Betriebsweise zum Aufnehmen von Diktaten mit der Schiebetaste 23 durch deren händische Verstellung in ihre Vorwärts-Einschaltposition die Vorwärts-Betriebsart "Normaler Vorlauf" und durch deren händische Verstellung in ihre Rückwärts-Einschaltposition die Rückwärts-Betriebsart "Schneller Rücklauf" einschaltbar.

Das Taschendiktiergerät 1 weist im Bereich eines kehlenartig ausgebildeten Abschnittes 24 der ersten Längsseitenwand 7 eine weitere Handhabe 25 zum Ein- und Ausschalten der Aufnahmefunktion des Gerätes 1 auf. Die weitere Handhabe 25 ist als Drucktaste ausgebildet, die um eine Schwenkachse 26 schwenkbar gelagert ist und mittels einer an ihr angreifenden, nicht dargestellten Rückstellfeder in der in Fig.1 dargestellten Ruhelage gehalten ist. Die weitere Handhabe 25 ist mit einem plattenförmigen Betätigungsteil 27 versehen, mit dem auf nicht dargestellte Weise ein Aufnahme/Wiedergabe-Umschalter betätigbar und weitere zum Einschalten der Aufnahmefunktion erforderliche Schaltfunktionen durchführbar sind. Die Drucktaste 25 ist wie bekannt zusätzlich zur Schiebetaste 23 zu betätigen, um Sprachsignale auf einem Magnetband speichern zu können. Erwähnt sei noch, daß im Bereich der ersten Querseitenwand 9 durch einen in dieser Querseitenwand vorgesehenen Durchbruch hindurch ein Rändelrad 28 aus dem Geräteinneren teilweise herausragt, mit dem ein Potentiometer zur Einstellung der Wiedergabelautstärke einstellbar ist.

Das Taschendiktiergerät 1 ist vorteilhafterweise zusätzlich zu der ersten Betriebsweise zum Aufnehmen von Diktaten, in der das Taschendiktiergerät in einer Hand gehalten wird und seine zum Aufnehmen von Diktaten erforderlichen Betriebsarten mit den beiden Handhaben 23 und 25 einschaltbar sind, auch noch in einer zweiten Betriebsweise zum Auswerten von Diktaten betreibbar, in der die hiefür erforderlichen Betriebsarten des Taschendiktiergerätes anstelle mit den Handhaben mit einer Steuereinrichtung einschaltbar sind, auf die von einer vom Taschendiktiergerät entfernten Stelle einwirkbar ist. Das Taschendiktiergerät 1 ist hiefür zum Steuern des Taschendiktiergeätes 1 mit einer solchen Steuereinrichtung ausgebildet. Mit der Steuereinrichtung sind, wie nachfolgend noch beschrieben ist, ein Vorwärts-Steuersignal und ein Rückwärts-Steuersignalauslösbar.

Im vorliegenden Fall ist die vorerwähnte Steuereinrichtung durch einen in Fig.1 schematisch angedeuteten Fußschalter 29 gebildet. Der Fußschalter 29 weist im Bereich seiner Deckenwand 30 einen ersten plattenförmigen, um eine Schwenkachse 31 verschwenkbaren, mit einem Fuß entgegen Federkraft verstellbaren Betätigungsteil 32 auf, mit dem ein in Fig.1 symbolisch angedeuteter erster Schalter S1 betätigbar ist. Weiters weist der Fußschalter 29 im Bereich seiner Deckenwand 30 einen zweiten plattenförmigen, um eine Schwenkachse 33 verschwenkbaren, mit einem Fuß entgegen Federkraft verstellbaren Betätigungsteil 34 auf, mit dem ein in Fig.1 ebenfalls symbolisch angedeuteter zweiter Schalter S2 betätigbar ist. Durch Betätigen des ersten Schalters S1 ist das Vorwärts-Steuersignal und durch Betätigen des zweiten Schalters S2 ist das Rückwärts-Steuersignal auslösbar. Die beiden Schalter S1 und S2 sind mit einem Anschlußkabel 35 verbunden, das mit einem Stecker 36 abgeschlossen ist. Das Anschlußkabel 35 und der Stecker 36 sind hiebei dreipolig ausgebildet.

Das Taschendiktiergerät 1 ist zum Zusammenwirken mit dem Fußschalter 29 ausgebildet, dessen Anschlußkabel 35 und Stecker 36 zum Weiterleiten des Vorwärts-Steuersignales und des Rückwärts-Steuersignales ausgebildet sind. Wie in Fig.1 schematisch angedeutet ist, weist das Taschendiktiergerät 1 zum Anstecken des das Anschlußkabel 35 des Fußschalters 29 abschließenden Steckers 36 eine Buchse 37 auf, die ebenfalls zum Weiterleiten des Vorwärts-Steuersignales und des Rückwärts-Steuersignales ausgebildet ist. Wie aus den Figuren 1 und 2 ersichtlich ist, ist die Buchse 37 im Bereich der ersten Längsseitenwand 7 des Taschendiktiergerätes 1 vorgesehen. Neben dieser Buchse 37 ist noch eine weitere Buchse 38 vorgesehen, in die ein nicht dargestellter weiterer Stecker einsteckbar ist, über den eine externe Gleichspannungsquelle an das Taschendiktiergerät 1 anschließbar ist.

Das Taschendiktiergerät 1 weist eine Steuerschaltung auf, der das Vorwärts-Steuersignal und das Rückwärts-Steuersignal zugeführt werden und mit der so wie in der ersten Betriebsweise zum Aufnehmen von Diktaten mit der Handhabe 23 in der zweiten Betriebsweise zum Auswerten von Diktaten in Abhängigkeit von den beiden mit der durch den Fußschalter 29 gebildeten Steuereinrichtung erzeugten Steuersignalen ferngesteuert die Vorwärts-Betriebsart und die Rückwärts-Betriebsart einschaltbar sind. Nachfolgend ist eine in Fig.4 dargestellte Schaltungsanordnung, die die vorerwähnte Steuerschaltung enthält, detailliert beschrieben.

In Fig.4 sind das Taschendiktiergerät 1 und der Fußschalter 29 symbolisch mit strichlierten Linien angedeutet. Zur elektrischen Energieversorgung des Taschendiktiergerätes 1 sind in dasselbe zwei in Serie geschaltete Batterien 39 einsetzbar, die eine positive Versorgungsspannung V1 von +3 Volt gegenüber Massepotential V2 abgeben. Die elektrische Energieversorgung des Gerätes 1 ist auch durch eine externe Gleichspannungsquelle möglich, die über einen mit ihr verbundenen Stecker an die Buchse 38 anschließbar ist. Die Buchse 38 weist drei Anschlüsse A1, A2 und A3 auf. Bei in die Buchse 38 eingestecktem Stecker stehen zwei steckerseitige Kontakte mit zwei buchsenseitigen Kontakten B1 und B3 in Kontakt und ist ein in der Buchse 38 enthaltener Schalter C1,2 von dem Stecker in seinem geöffneten Schaltzustand gehalten, wodurch dann die Batterien 39 abgeschaltet sind. Bei einer internen Versorgung wird die Versorgungsspannung V1 der Batterien 39 über den Anschluß A2 und den Schalter C1,2 sowie den Anschluß A1 der Buchse 38 einem Eingangsanschluß D1 eines Betriebsartenschalters 40 zugeführt, der zwei gemeinsam verstellbare Schaltkontakte 41 und 42 aufweist. Bei externer Versorgung wird die Versorgungsspannung V1 über den Kontakt B1 und den Anschluß A1 der Buchse 38 dem Eingangsanschluß D1 des Betriebsartenschalters 40 zugeführt. Der Betriebsartenschalter 40 ist von der Schiebetaste 23 her umschaltbar, worauf anläßlich der Beschreibung der Figuren 5 bis 8 noch hingewiesen wird. Dementsprechend sind die vier Schaltstellungen der beiden Schaltkontakte 41 und 42 mit SRL für "Schneller Rücklauf", mit ST für "Stop", mit VL für "Normaler Vorlauf" und mit SVL für "Schneller Vorlauf" bezeichnet. Der Betriebsartenschalter 40 weist drei Ausgangsanschlüsse E1, E2 und E3 auf, über die je nach Schaltstellung der beiden Schaltkontakte 41 und 42 des Betriebsartenschalters 40 die Versorgungsspannung V1 bestimmten Schaltungsteilen der Schaltungsanordnung gemäß Fig.4 zuführbar ist.

Über den ersten Eingangsanschluß E1 des Betriebsartenschalters 40 ist die Versorgungsspannung V1 einem Schaltungsteil 43 zuführbar, mit dem bei auftretendem Stillstand des Rückwärts-Wickeldornes 19, also bei Erreichen eines Endes des in einer Kassette untergebrachten Magnetbandes oder bei Auftreten eines Bandrisses oder bei irrtümlicherweise nicht in das Gerät eingesetzter Kassette, ein Steuersignal zum Abschalten des Motors 21 bzw. des Gerätes 1 erzeugbar ist. Der Endabschaltungs-Schaltungsteil 43 enthält eine photoelektrische Lichtschranke 44, die aus einer Photodiode 45, einem mit dem Rückwärts-Wickeldorn 19 verbundenen, rotierend antreibbaren Flügelrad 46 zum periodischen Unterbrechen des Lichtpfades und einem Phototransistor 47 besteht. Entsprechend der Rotation des Flügelrades 46 erzeugt der Phototransistor 47 Impulse, die einer ersten Transistorstufe 48 zugeführt werden, deren Transistor 49 im Takte der Impulse leitend gesteuert wird. Über den Transistor 49 erfolgt im Takte der Impulse ein Entladen eines Kondensators 50, der über einen Widerstand 51 geladen wird. Solange der Rückwärts-Wickeldorn 19 rotiert, wird der Kondensator 50 periodisch entladen, so daß am Ausgang 52 der ersten Transistorstufe 48 ein niedriges Potential L vorliegt, nämlich Massepotential V2. Der Ausgang 52 ist mit den beiden Eingängen eines NAND-Gatters 53 verbunden, an dessen Ausgang 54 ein hohes Potential H auftritt, nämlich die Versorgungsspannung V1, solange der Rückwärts-Wickeldorn 19 rotiert. Der Ausgang 54 ist mit den beiden Eingängen eines weiteren NAND-Gatters 55 verbunden, an dessen Ausgang 56 ein niedriges Potential L auftritt, solange der Rückwärts-Wickeldorn 19 rotiert. An den Ausgang 56 ist ein Warnsignalgenerator 57 angeschlossen, mit dem ein Warnsignal erzeugbar ist, das über eine Verstärkerstufe 58 dem Lautsprecher 22 des Gerätes 1 zur akustischen Wiedergabe zuführbar ist.

Wenn es zu einem Stillstand des Rückwärts-Wickeldornes 19 kommt, entfallen die mit der Lichtschranke 44 erzeugten Impulse, so daß das periodische Entladen des Kondensators 50 unterbleibt. Der Kondensator 50 lädt sich dann auf, so daß am Ausgang 52 der ersten Transistorstufe 48 ein hohes Potential H auftritt. Dementsprechend tritt am Ausgang 54 des ersten NAND-Gatters 53 ein niedriges Potential L durch das das Taschendiktiergerät elektrisch abschaltbar ist, und am Ausgang 56 des zweiten NAND-Gatters 55 ein hohes Potential H auf. Durch letzteres wird der Warnsignalgenerator 57 eingeschaltet und folglich gibt der Lautsprecher 22 einen akustischen Warnton ab, der den Benützer des Gerätes auf akustische Weise über das Abschalten des Gerätes beim Erreichen des Bandendes, beim Auftreten eines Bandrisses oder beim Fehlen einer Kassette informiert.

Über den zweiten Ausgangsanschluß E2 des Betriebsartenschalters 40 ist die Versorgungsspannung V1 im wesentlichen der bereits erwähnten Steuerschaltung zuführbar, die in Fig.4 mit dem Bezugszeichen 59 bezeichnet ist. Der Steuerschaltung 59 sind das Vorwärts-Steuersignal und das Rückwärts-Steuersignal, die beide mit dem Fußschalter 29 auslösbar sind, zuführbar. Mit der Steuerschaltung 59 sind die Betriebsarten des Taschendiktiergerätes 1 einschaltbar, was beim vorliegenden Gerät damit gleichzusetzen ist, daß mit der Steuerschaltung 59 der Motor 21 des Gerätes wahlweise in einer der entgegengesetzten Drehrichtungen einschaltbar ist, und zwar in einer dem Gegenuhrzeigersinn entsprechenden Vorwärts-Drehrichtung, die mit einem Pfeil VW angegeben ist, oder in einer dem Uhrzeigersinn entsprechenden Rückwärts-Drehrichtung, die mit einem Pfeil RW angegeben ist.

Die Steuerschaltung 59 enthält eine Drehzahlregelschaltung 60 für den Motor 21, die als integrierter Baustein ausgebildet ist und die beispielsweise durch den im Handel unter der Typennummer AN6612S erhältlichen Baustein gebildet ist. Der Baustein 60 weist acht Anschlüsse F1 bis F8 auf. An den Anschluß F1 ist ein niederohmiger Widerstand 61 angeschlossen, der einen Meßwiderstand bildet, mit dem der durch den Motor 21 fließende Strom meßbar ist. Proportional zum jeweiligen Motorstrom tritt am Meßwiderstand 61 eine Meßspannung V3 auf, die etwa in der Größenordnung von 10 bis 20mV, also nur geringfügig über dem Massepotential V2 liegt. Die Meßspannung V3 wird als sogenannter Ist-Wert der Drehzahlregelschaltung 60 an dem Anschluß F1 zugeführt. An die Anschlüsse F2 und F3 ist ein aus zwei fixen Widerständen, einem einstellbaren Widerstand und einem Kondensator gebildetes Netzwerk 62 angeschlossen. Mit dem einstellbaren Widerstand dieses Netzwerkes 62 ist eine gewünschte Soll-Drehzahl des Motors 21 einstellbar und sind Motortoleranzen hinsichtlich Drehzahl ausgleichbar. Der Anschluß F4 ist zum Zuführen der Versorgungsspannung V1 zu dem Baustein 60 mit dem Ausgangsanschluß E2 des Betriebsartenschalters 40 verbunden. Der Anschluß F5 liegt an Massepotential V2. Der Anschluß F8 ist mit einem ersten Motoranschluß G1 verbunden, wodurch der Drehzahlregelschaltung 60 eine weitere von der am Motor 21 abfallenden Spannung abhängige Ist-Wert-Größe zuführbar ist. Der Anschluß F7 stellt einen Steuerausgang dar, an dem die Drehzahlregelschaltung ein Steuersignal abgibt, das zum Steuern der Leitfähigkeit eines Motorspeisungs-Transistos 63 dient, dessen Basis mit dem Anschluß F7, dessen Emitter mit dem Ausgangsanschluß E2 des Betriebsartenschalters 40 und dessen Kollektor mit dem ersten Motoranschluß G1 verbunden ist. Der Anschluß F6 dient als Steuereingang, über den ein interner Transistor der Drehzahlregelschaltung 60 ansteuerbar ist. Mit dem internen Transistor ist über den Anschluß F7 der Motorspeisungs-Transistor 63 steuerbar. Ein Sperren des Motorspeisungs-Transistors 63 erfolgt dann, wenn an den Anschluß F6 Massepotential V2 angeschaltet wird, was beispielsweise vom Ausgang 54 des NAND-Gatters 53 des Schaltungsteiles 43 her über eine Schutzdiode 64 möglich ist. Die Schutzdiode 64 verhindert, daß ein am Ausgang 54 auftretendes hohes Potential H zum Anschluß F6 des Bausteins 60 gelangt, was ein Durchsteuern des Motorspeisungs-Transistors 63 in seinen voll-leitenden Zustand zur Folge hätte.

Mit dem ersten Motoranschluß G1 ist der Kollektor eines Transistors 65 einer zweiten Transistorstufe 66 verbunden. Die zweite Transistorstufe 66 dient dazu, den ersten Motoranschluß G1 an Massepotential V2 legen zu können. Dabei ist der Basisspannungsteiler 67 der zweiten Transistorstufe 66 an eine Leitung 68 angeschaltet, die mit einem zweiten Motoranschluß G2 verbunden ist.

An die mit dem zweiten Motoranschluß G2 verbundene Leitung 68 ist weiters ein Widerstand 69 eines Basisspannungsteilers 70 einer dritten Transistorstufe 71 angeschlossen. Der zweite Widerstand 72 des Basisspannungsteilers 70 ist mit dem Ausgangsanschluß E2 des Betriebsartenschalters 40 verbunden. Der Transistor 73 der dritten Transistorstufe 71 ist mit seinem Kollektor mit dem Ausgang 52 der ersten Transistorstufe 48 des Schaltungsteiles 43 verbunden. Die dritte Transistorstufe 71 dient dazu, den Schaltungsteil 43 zum Erzeugen eines Steuersignales zum Abschalten des Gerätes bzw. des Motors 21 außer Funktion setzen zu können. Dies erfolgt in der Weise, daß der Transistor 73 in seinen leitenden Zustand gesteuert wird, wodurch über den Transistor 73 der Ausgang 52 stets auf niedrigem Potential L gehalten wird, dies auch dann, wenn die Impulse der Lichtschranke 44 ausbleiben und daher kein Entladen des Kondensators 50 über den Transistor 49 mehr erfolgt.

An die Leitung 68 ist weiters der Basisspannungsteiler 74 einer vierten Transistorstufe 75 angeschlossen. Der Kollektor des Transistors 76 dieser vierten Transistorstufe 75 ist mit dem Anschluß F6 der Drehzahlregelschaltung 60 verbunden. Wenn der Transistor 76 leitend gesteuert wird, hat dies zur Folge, daß der Anschluß F6 an Massepotential V2 angeschaltet wird, wodurch der Motorspeisungs-Transistor 63 gesperrt wird.

Über den dritten Ausgangsanschluß E3 des Betriebsartenschalters 40 ist die Versorgungsspannung V1 dem Basisspannungsteiler 77 einer fünften Transistorstufe 78 zuführbar. Diese Transistorstufe 78 dient dazu, den Motorspeisungs-Transistor 63 erforderlichenfalls voll durchzusteuern, indem der Transistor 79 der fünften Transistorstufe 78 leitend gesteuert wird.

Wie bereits erwähnt, weist das Taschendiktiergerät 1 eine Buchse 37 auf. Die Buchse 37 weist fünf Anschlüsse H1 bis H5 auf. Geräteseitig sind diese fünf Anschlüsse H1 bis H5 folgendermaßen verschaltet. Der Anschluß H1 ist mit dem Ausgangsanschluß E2 des Betriebsartenschalters 40 verbunden. Der Anschluß H2 ist mit der Leitung 68 verbunden, die zum zweiten Motoranschluß G2 führt. Die Anschlüsse H3 und H4 sind über einen Widerstand 80 miteinander verbunden. Dieser Widerstand 80 bildet einen Ersatzwiderstand für den Anschlußkabelwiderstand, um unabhängig davon, ob an die Buchse 37 ein Stecker angesteckt ist oder nicht, dieselbe Motordrehzahl zu gewährleisten. Der Anschluß H5 ist mit dem Anschluß F1 der Drehzahlregelschaltung 60 und folglich mit dem an diesen Anschluß F1 angeschlossenen Meßwiderstand 61 verbunden. Buchsenseitig bestehen mit den fünf Anschlüssen H1 bis H5 folgende elektrische Verbindungen. Mit dem Anschluß H1 ist ein Kontakt J1, mit dem Anschluß H2 ein Kontakt J2 und mit dem Anschluß H5 ein Kontakt J5 elektrisch verbunden. Die Kontakte J1, J2 und J5 sind in der Buchse 37 enthalten. Ebenso sind in der Buchse 37 zwei Schalter K2,3 und K4,5 vorgesehen, von denen der Schalter K2,3 zwischen die beiden Anschlüsse H2 und H3 und der Schalter K4,5 zwischen die beiden Anschlüsse H4 und H5 geschaltet ist. In die Buchse 37 ist der mit dem Fußschalter 29 über das Anschlußkabel 35 verbundene Stecker 36 einsteckbar. Bei eingestecktem Stecker 36 sind die beiden Schalter K2,3 und K4,5 in der Buchse 37 von dem Stecker 36 in ihren geöffneten Schaltzustand geschaltet.

Der Stecker 36, der über drei im Kabel 35 zusammengefaßte Leitungen L1, L2 und L5 mit dem Fußschalter 29 verbunden ist, weist drei mit den Leitungen L1, L2 und L5 elektrisch verbundene, voneinander isolierte Kontakte M1, M2 und M5 auf, die bei angestecktem Stecker 36 mit den Kontakten J1, J2 und J5 der Buchse 37 in Kontakt stehei. Von den drei zum Fußschalter 29 geführten Leitungen L1, L2 und L5 ist die Leitung L1 mit einem Arbeitskontakt N1 des von dem Betätigungsteil 34 des Fußschalters 29 betätigbaren zweiten Schalters S2 verbunden, der wie ersichtlich als Umschalter ausgebildet ist. Die Leitung L2 ist mit dem Wurzelkontakt N2 des zweiten Schalters S2 verbunden, dessen Ruhekontakt N3 mit einem Arbeitskontakt N4 des von dem Betätigungsteil 32 des Fußschalters 29 betätigbaren ersten Schalters S1 verbunden ist, der ebenfalls als Umschalter ausgebildet ist. Die Leitung L5 ist mit dem Wurzelkontakt N5 des ersten Schalters S1 verbunden, dessen Ruhekontakt N6 mit einem Widerstand 81 verbunden ist. Der Widerstand 81 ist Bestandteil einer im Fußschalter enthaltenen sechsten Transistorstufe 82, mit deren Transistor 83 die Schaltfunktion des zweiten Schalters S2 ersatzweise durchführbar ist. Die sechste Transistorstufe 82 dient dazu, nach einem Ausschalten der Vorwärts-Betriebsart "Normaler Vorlauf" vom Fußschalter 29 her über den Transistor 83 für eine durch die Ladezeit für einen in der Transistorstufe 82 enthaltenen Kondensator 84 bestimmte Zeitdauer im Taschendiktiergerät 1 die Betriebsart "Schneller Rücklauf" kurzzeitig einzuschalten. Die Transistorstufe 82 weist zwei weitere Widerstände 85 und 86 auf, die beide mit der Leitung L1 verbunden sind.

In Fig.4 sind die beiden als Umschalter ausgebildeten Schalter S1 und S2 in ihren Ruhelagen dargestellt, wobei der Wurzelkontakt N2 des zweiten Schalters S2 mit dem Ruhekontakt N3 dieses Schalters und der Wurzelkontakt N5 des ersten Schalters S1 mit dem Ruhekontakt N6 dieses Schalters in Kontakt steht. Hiebei ist dann, soferne der Stecker 36 in die Buchse 37 eingesteckt ist, im Taschendiktiergerät 1 vom Fußschalter 29 auf ferngesteuerte Weise die Betriebsart "Stop" eingeschaltet, wie dies in Fig.4 bei den beiden Schaltern S1 und S2 angegeben ist, weil in diesem Fall mit den beiden Schaltern S1 und S2 jeglicher Motorstromkreis für den Motor 21 unterbrochen ist. Durch Umschalten des ersten Schalters S1, wobei dann der Wurzelkontakt N5 mit dem Arbeitskontakt N4 in Kontakt steht, ist im Taschendiktiergerät 1 die Vorwärts-Betriebsart "Normaler Vorlauf" auf ferngesteuerte Weise einschaltbar. Durch Umschalten des zweiten Schalters S2, wobei dann der Wurzelkontakt N2 mit dem Arbeitskontakt N1 in Kontakt steht, ist im Taschendiktiergerät die Rückwärts-Betriebsart "Schneller Rücklauf" auf ferngesteuerte Weise einschaltbar.

In seiner ersten Betriebsweise zum Aufzeichnen von Diktaten werden die hiefür erforderlichen Betriebsarten des Taschendiktiergerätes 1 mittels der beiden Handhaben 23 und 25 von Hand aus eingeschaltet, wobei der Fußschalter 29 mit dem Taschendiktiergerät 1 nicht zusammenwirkt, da der Stecker 36 des Fußschalters nicht in die Buchse 37 eingesteckt ist.

Bei in ihrer Stop-Einschaltposition befindlicher Schiebetaste 23 nimmt der Betriebsartenschalter 40 eine Stop-Schaltstellung ein, in der seine Schaltkontakte 41 und 42 mit nichtbeschalteten Gegenkontakten in Kontakt stehen, so daß kein Weiterleiten der Versorgungsspannung V1 erfolgt. In diesem Fall ist daher die gesamte Schaltung des Taschendiktiergerätes 1 ohne Spannungsversorgung und daher abgeschaltet.

Wenn in diesem Fall die Schiebetaste 23 beispielsweise aus ihrer Stop-Einschaltposition in ihre Vorwärts-Einschaltposition verschoben wird, wird der Betriebsartenschalter 40 aus seiner Stop-Schaltstellung in seine Vorlauf-Schaltstellung umgeschaltet. Hiedurch wird über den Ausgangsanschluß E1 die Versorgungsspannung V1 an den Schaltungsteil 43 angeschlossen und dieser daher in Funktion gesetzt. Weiters wird über den Ausgangsanschluß E2 die Steuerschaltung 59 mit der Versorgungsspannung V1 versorgt. Dabei wird vom Ausgangsanschluß E2 über den Motorspeisungs-Transistor 63, den Motor 21, den Anschluß H2, den geschlossenen Schalter K2,3 und den Anschluß H3 der Buchse 37, den Ersatzwiderstand 80, den Anschluß H4, den Schalter K4,5 und den Anschluß H5 der Buchse 37 sowie den Meßwiderstand 61 ein Motorstromkreis geschlossen. Hiedurch wird der Motor 21 eingeschaltet, wobei seine Motorwelle entgegen dem Uhrzeigersinn rotiert, was beim vorliegenden Taschendiktiergerät der Vorwärts-Drehrichtung VW des Motors 21 entspricht. Dabei wird die Drehzahl des Motors 21 mittels der Drehzahlregelschaltung 60 auf einen konstanten Wert geregelt.

Wenn die Schiebetaste 23 in ihre SVL-Einschaltposition verschoben wird und dementsprechend der Betriebsartenschalter 40 in seine SVL-Schaltstellung umgeschaltet wird, dann wird ebenso an den Ausgangsanschluß E2 die Versorgungsspannung V1 angeschaltet und es wird ebenso der vorstehend beschriebene Motorstromkreis geschlossen. Zusätzlich wird aber in dieser Betriebsart an den Ausgangsanschluß E3 die Versorgungsspannung V1 angeschaltet, wodurch der Transistor 79 der fünften Transistorstufe 78 leitend gesteuert wird, wodurch der Motorspeisungs-Transistor 63 voll durchgesteuert wird. In dieser Betriebsart erfolgt somit keine Drehzahlregelung des Motors 21, sondern der Motor läuft mit einer durch die Versorgungsspannung V1 bestimmten ungeregelten hohen Drehzahl, wobei die Motorwelle des Motors entgegen dem Uhrzeigersinn rotiert, was wiederum der Vorwärts-Drehrichtung VW entspricht.

Wenn die Schiebetaste 23 in ihre Rückwärts-Einschaltposition verschoben wird und dementsprechend der Betriebsartenschalter 40 in seine SRL-Schaltstellung umgeschaltet wird, hat dies exakt dieselben Auswirkungen wie beim Umschalten des Betriebsartenschalters 40 in seine SVL-Schaltstellung zur Folge. Dabei wird auch in der Betriebsart "Schneller Rücklauf" der Motor 21 mit hoher Drehzahl angetrieben, wobei die Motorwelle ebenfalls entgegen dem Uhrzeigersinn rotiert, was beim vorliegenden Gerät der Vorwärts-Drehrichtung VW des Motors entspricht, obwohl die Betriebsart "Schneller Rücklauf" eingeschaltet ist. Die in der Betriebsart "Schneller Rücklauf" gegenüber der Betriebsart "Schneller Vorlauf" erforderliche Drehrichtungsumkehr wird beim vorliegenden Taschendiktiergerät im mechanischen Teil der Antriebseinrichtung vorgenommen, worauf nachfolgend bei der Beschreibung dieser Antriebseinrichtung noch näher eingegangen ist.

In seiner zweiten Betriebsweise zum Auswerten von Diktaten werden die hiefür erforderlichen Betriebsarten des Taschendiktiergerätes 1 mittels des Fußschalters 29 eingeschaltet. Hiefür wird der Stecker 36 des Fußschalters 29 in die Buchse 37 eingesteckt, wobei die Schalter K2,3 und K4,5 in der Buchse 37 geöffnet werden, was zur Folge hat, daß die Betriebsarten des Taschendiktiergerätes 1 nur noch vom Fußschalter 29 her und nicht mehr von der Schiebetaste 23 bzw. von dem von der Schiebetaste 23 betätigbaren Betriebsartenschalter 40 her einschaltbar sind, weil durch das Öffnen der beiden in der Buchse 37 enthaltenen, als Präventivschalter vorgesehenen Schalter jeglicher mit dem Betriebsartenschalter 40 schließbare Motorstromkreis unterbrochen wird. Zur Vorbereitung der Durchführung der zweiten Betriebsweise muß bei dem vorliegenden Taschendiktiergerät 1 die Schiebetaste 23 nach dem Einstecken des Steckers 36 in die Buchse 37 in ihre Vorwärts-Einschaltposition verschoben werden, wodurch der Betriebsartenschalter 40 in seine Vorlauf-Schaltstellung umgeschaltet wird. Eine solche Verstellung der Schiebetaste 23 in ihre Vorwärts-Einschaltposition und die daraus resultierenden Folgen zur Vorbereitung des Fernsteuerbetriebes sind prinzipiell nicht unbedingt notwendig, sind aber beim vorliegenden Gerät vorgesehen, weil hiedurch im mechanischen Teil der Antriebseinrichtung Vorteile hinsichtlich Hubverkleinerungen und Kräfteverminderungen erzielt werden.

Wenn nun beispielsweise durch Fußbetätigung der erste Schalter S1 aus seiner Ruhelage in seine Betriebslage umgeschaltet wird, hat dies das Schließen eines Motorstromkreises zur Folge, der von dem Ausgangsanschluß E2 des Betriebsartenschalters 40, an den die Versorgungsspannung V1 angeschaltet ist, über den Motorspeisungs-Transistor 63, den Motor 21, die Leitung 68, den Anschluß H2 und den Kontakt J2 der Buchse 37, den Kontakt M2 des Steckers 36, die Leitung L2, den Wurzelkontakt N2 und den Ruhekontakt N3 des in seiner Ruhelage befindlichen zweiten Schalters S2, der auf diese Weise eine Prioritätsfunktion gegenüber dem ersten Schalter S1 hat, den Arbeitskontakt N4 und den Wurzelkontakt N5 des ersten Schalters S1, die Leitung L5, den Kontakt M5 des Steckers 36, den Kontakt J5 und den Anschluß H5 der Buchse 37 und den Meßwiderstand 61 zur Masse verläuft. Dies hat zur Folge, daß der Motor 21 eingeschaltet wird und seine Motorwelle entgegen dem Uhrzeigersinn rotiert, was der Vorwärts-Drehrichtung VW des Motors 21 entspricht. Dabei wird die Drehzahl des Motors 21 mittels der Drehzahlregelschaltung 60 auf einen konstanten Wert geregelt. Mit anderen Worten ausgedrückt, wird durch das Umschalten des ersten Schalters S1 des Fußschalters 29 das am Fußende des Meßwiderstandes 61 anliegende Massepotential V2 als Vorwärts-Steuersignal von dem Fußschalter 29 ausgelöst und über letztlich den Anschluß H2 der Buchse 37 der Steuerschaltung 59 zugeführt. In der Steuerschaltung 59 wird das Massepotential V2 über die mit dem Anschluß H2 verbundene Leitung 68 dem zweiten Motoranschluß G2 zugeführt, wodurch entsprechend diesem Vorwärts-Steuersignal V2 ferngesteuert die Vorwärts-Betriebsart "Normaler Vorlauf" im Taschendiktiergerät 1 durch Einschalten von dessen Motor 21 in seiner Vorwärts-Drehrichtung VW eingeschaltet wird.

Um die Vorwärts-Betriebsart "Normaler Vorlauf" vom Fußschalter 29 her wieder auszuschalten, wird die entsprechende Fußbetätigung des Fußschalters beendet, wodurch der erste Schalter S1 wieder in seine Ruhelage zurückkehrt. Hiedurch wird der zuvor geschlossene Motorstromkreis wieder geöffnet. Ferner wird hiedurch der Meßwiderstand 61 über den Wurzelkontakt N5 und den Ruhekontakt N6 des Schalters S1 mit dem Widerstand 81 verbunden. Gleichzeitig liegen die beiden anderen Widerstände 85 und 86 der Transistorstufe 82 über die Leitung L1, den Kontakt M1 des Steckers 36 und den Kontakt J1 und den Anschluß H1 der Buchse 37, der mit dem Ausgangsanschluß E2 verbunden ist, an der Versorgungsspannung V1. Hiedurch wird der in Serie zwischen den Widerständen 85 und 81 liegende Kondensator 84 aufgeladen. Während des Ladevorganges ist der Transistor 83 leitend. Sobald der Kondensator 84 aufgeladen ist, wird der Transistor 83 gesperrt. Solange der Transistor 83 leitend ist, was für einige Millisekunden der Fall ist, wird über den Transistor 83 im Taschendiktiergerät 1 die Betriebsart "Schneller Rücklauf" eingeschaltet. Auf den Zweck dieses kurzzeitigen Einschaltens der Betriebsart "Schneller Rücklauf" wird nachfolgend zurückgekommen, nämlich bei der Beschreibung des mechanischen Teiles der Antriebseinrichtung des Taschendiktiergerätes 1. Die Funktion des Transistors 83 entspricht zur Gänze der Funktion des zweiten Schalters S2, auf die im folgenden detailliert eingegangen ist. Erwähnt sei noch, daß der Widerstand 86 als Entladewiderstand zum Entladen des Kondensators 84 vorgesehen ist, über den der Kondensator 84 beispielsweise nach einem Trennen des Steckers 36 von der Buchse 37 entladbar ist.

Wenn durch Fußbetätigung der zweite Schalter S2 aus seiner Ruhelage in seine Betriebslage umgeschaltet wird, wird die Versorgungsspannung V1 als Rückwärts-Steuersignal ausgelöst und der Steuerschaltung 59 zugeführt, die entsprechend diesem Rückwärts-Steuersignal V1 ferngesteuert die Rückwärts-Betriebsart "Schneller Rücklauf" im Taschendiktiergerät 1 einschaltet. Das Auslösen des Rückwärts-Steuersignales V1 erfolgt in der Weise, daß die am Ausgangsanschluß E2 des Betriebsartenschalters 40 anliegende Versorgungsspannung V1 über den Anschluß H1 und den Kontakt J1 der Buchse 37, den Kontakt M1 des Steckers 36 und die Leitung L1 dem Arbeitskontakt N1 des zweiten Schalters S2 zugeführt wird und durch den umgeschalteten zweiten Schalter S2 von dessen Wurzelkontakt N2 über die Leitung L2, den Kontakt M2 des Steckers 36, den Kontakt J2 und den Anschluß H2 der Buchse 37 der Steuerschaltung 59 zugeführt wird. In dieser Steuerschaltung 59 wird das durch die Versorgungsspannung V1 gebildete Rückwärts-Steuersignal der mit dem Anschluß H2 verbundenen Leitung 68 und von dieser dem zweiten Motoranschluß G2 zugeführt. Weiters wird die Versorgungsspannung V1 von der Leitung 68 auch dem Basisspannungsteiler 67 der zweiten Transistorstufe 66 zugeführt, wodurch der Transistor 65 leitend wird und über den Transistor 65 der erste Motoranschluß G1 an Massepotential V2 angeschaltet wird. Auf diese Weise ist der Motor 21 mit seinem ersten Anschluß G1 an Massepotential V2 und mit seinem zweiten Anschluß G2 an die Versorgungsspannung V1 angeschlossen. Hiedurch wird der Motor 21 auf ungeregelte Weise mit hoher Drehzahl angetrieben, wobei jedoch aufgrund der umgepolten Spannungsversorgung des Motors 21 dessen Motorwelle im Uhrzeigersinn rotiert, was der Rückwärts-Drehrichtung RW des Motors 21 beim vorliegenden Gerät entspricht. Von der im vorliegenden Fall an der Leitung 68 anliegenden Versorgungsspannung V1 wird über den an die Leitung 68 angeschlossenen Basisspannungsteiler 74 der vierten Transistorstufe 75 der Transistor 76 derselben in den leitenden Zustand gesteuert. Hiedurch wird über den Transistor 76 der Anschluß F6 der Drehzahlregelschaltung 60 an Massepotential V2 gelegt, was zur Folge hat, daß der Motorspeisungs-Transistor 63 vollkommen gesperrt wird, also keinen Einfluß auf den in diesem Fall umgepolt mit Spannung versorgten Motor 21 nimmt. Um die Rückwärts-Betriebsart "Schneller Rücklauf" vom Fußschalter 29 her wieder auszuschalten, wird die entsprechende Fußbetätigung des Fußschalters beendet, wodurch der zweite Schalter S2 wieder in seine Ruhelage zurückkehrt und daher der zuvor geschlossene Motorstromkreis wieder geöffnet wird.

Solange das Taschendiktiergerät 1 in seiner zweiten Betriebsweise zum Auswerten von Diktaten betrieben wird, wobei seine Betriebsarten vom Fußschalter her gesteuert werden, muß dafür gesorgt werden, daß bei vom Fußschalter her im Gerät eingeschalteter Betriebsart "Stop" die Endabschaltung gemäß dem Schaltungsteil 43 unwirksam bleibt. Wenn nämlich nach einem zuvor vom Fußschalter 29 her erfolgten Einschalten einer Betriebsart diese Betriebsart vom Fußschalter her wieder ausgeschaltet wird, hat dies zur Folge, daß die zuvor angetriebenen Wickeldorne nicht mehr weiter angetrieben werden. Folglich gibt die Lichtschranke 44 der photoelektrischen Endabschaltung gemäß dem Schaltungsteil 43 keine Impulse mehr ab. Daher würde, weil der Betriebsartenschalter 40 in seiner Vorlauf-Schaltstellung sich befindet und daher am Ausgangsanschluß E1 die Versorgungsspannung V1 anliegt, der vom Ausgangsanschluß E1 her versorgte Endabschaltungs-Schaltungsteil 43 ansprechen und einerseits über das NAND-Gatter 53 und die Schutzdiode 64 den Anschluß F6 der Drehzahlregelschaltung 60 auf Massepotential V2 legen, so daß letztere vollkommen abgeschaltet wird, und andererseits über das zweite NAND-Gatter 55 den Warntongenerator 57 einschalten. Das Taschendiktiergerät 1 wäre dann aber gänzlich abgeschaltet, so daß eine nachfolgende Schalterbetätigung des Fußschalters 29 kein Einschalten der entsprechenden Betriebsart zur Folge hätte. Dies muß verhindert werden, was über die dritte Transistorstufe 71 erfolgt, deren Transistor 73 über den am Ausgangsanschluß E2 des Betriebsartenschalters 40 angeschlossenen Widerstand 72 leitend gesteuert wird, wodurch der Ausgang 52 der ersten Schaltstufe 48 auf alle Fälle auf Massepotential V2 gehalten wird, wodurch ein laufender Wickeldorn 19 simuliert ist und daher die Endabschaltung gemäß dem Schaltungsteil 43 nicht zur Wirkung kommt.

Bei vom Fußschalter 29 her eingeschalteter Vorwärts-Betriebsart "Normaler Vorlauf" liegt an der Leitung 68 die am Meßwiderstand 61 abfallende Meßspannung V3 an, die nur geringfügig über dem Massepotential V2 liegt, wodurch der Transistor 73 der dritten Transistorstufe 71 gesperrt wird und daher keinen Einfluß auf den Schaltungsteil 43 ausübt. In diesem Fall ist daher die Endabschaltung gemäß dem Schaltungsteil 43 wirksam geschaltet, so daß sie bei Erreichen eines Bandendes bei vom Fußschalter her eingeschalteter Betriebsart "Normaler Vorlauf" auch anspricht, was selbstverständlich sinnvoll ist.

Bei vom Fußschalter her eingeschalteter Rückwärts-Betriebsart "Schneller Rücklauf", die stets nur für kurze Zeit zum Rückspringen eingeschaltet wird, wird die Endabschaltung gemäß dem Schaltungsteil 43 nicht benötigt. Dementsprechend wird durch die bei vom Fußschalter her eingeschalteter Betriebsart "Schneller Rücklauf" an die Leitung 68 angelegte Versorgungsspannung V1 über den Widerstand 69 - ebenso wie über den mit dem Ausgangsanschluß E2 des Betriebsartenschalters 40 verbundenen Widerstand 72 - der Transistor 73 der dritten Transistorstufe 71 leitend gesteuert, wodurch der Ausgang 52 der ersten Transistorstufe 48 auf Massepotential V2 geschaltet und daher der Schaltungsteil 43 außer Wirkung gesetzt ist.

Wie bereits erwähnt, weist das Taschendiktiergerät 1 eine Antriebseinrichtung zum rotierenden Antreiben der beiden Wickeldorne 19 und 20 auf, die nachfolgend anhand der Figuren 5 bis 9 näher beschrieben ist. Diese Antriebseinrichtung, die mit dem Bezugszeichen 87 bezeichnet ist, weist den Motor 21 auf. Der Motor 21 ist wie bereits erwähnt in einer dem Gegenuhrzeigersinn entsprechenden Vorwärts-Drehrichtung VW einschaltbar, in der die Welle 88 des Motors 21 sowohl bei in der ersten Betriebsweise betriebenem Gerät von der Schiebetaste 23 her eingeschalteter Vorwärts-Betriebsart "Normaler Vorlauf" als auch bei in der ersten Betriebsweise betriebenem Gerät von der Schiebetaste 23 her eingeschalteter Rückwärts-Betriebsart "Schneller Rücklauf" als auch noch bei in der zweiten Betriebsweise betriebenem Gerät vom Fußschalter 29 her eingeschalteter Vorwärts-Betriebsart "Normaler Vorlauf" rotiert. Weiters ist der Motor 21 in einer dem Uhrzeigersinn entsprechenden Rückwärts-Drehrichtung RW einschaltbar, in der die Welle 88 des Motors 21 bei in der zweiten Betriebsweise betriebenem Gerät vom Fußschalter 29 her eingeschalteter Rückwärts-Betriebsart "Schneller Rücklauf" rotiert. Die Antriebseinrichtung 87 weist ferner einen von einer verstellbaren Trageinrichtung 89 getragenen Antriebsmechanismus 90 auf.

Der Antriebsmechanismus 90 weist eine auf der Trageinrichtung 89 drehbar gelagerte Antriebswelle 91 auf, mit der ein vom Motor 21 rotierend antreibbares, als Schwungmasse wirksames Zwischenrad 92 koaxial und drehfest verbunden ist. Das Zwischenrad 92 ist als Pesenrad ausgebildet. Mit der Welle 88 des Motors 21 ist ein weiteres Pesenrad 93 drehfest verbunden und die beiden Pesenräder 92 und 93 sind mit einer um die beiden Pesenräder geschlungenen Pese 94 antriebsmäßig verbunden. Der Antriebsmechanismus 90 weist weiters ein mit der Antriebswelle 91 koaxial und drehfest verbundenes ZwischenZahnrad 95 auf. Das Zwischen-Zahnrad 95 ist beim vorliegenden Gerät mit dem Zwischenrad 92 einstückig ausgebildet. Mit dem Zwischen-Zahnrad 95 ist in der ersten Betriebsweise des Gerätes 1 bei von der Handhabe 23 her eingeschalteter Rückwärts-Betriebsart ein mit dem Rückwärts-Wickeldorn 19 koaxial verbundenes Rückwärts-Zahnrad 96 antreibbar. Weiters weist der Antriebsmechanismus 90 ein einen elektromechanisch verstellbaren Teilbereich des Antriebsmechanismus bildendes, in Abhängigkeit von seiner Drehrichtung bzw. von der Drehrichtung des antreibenden Motors 21 verstellbares Zwischen-Reibrad 97 auf. Das Zwischen-Reibrad 97 ist an einem um die Antriebswelle 91 verschwenkbaren Reibradträger 98 drehbar gelagert und an die Antriebswelle 91 angedrückt gehalten und von der Antriebswelle 91 reibungsschlüssig antreibbar.

Der Reibradträger 98 ist durch einen um eine Schwenkachse 99 verschwenkbaren Hebel gebildet. Die Schwenkachse 99 verläuft parallel zur Antriebswelle 91 und ist durch einen im wesentlichen zylindrischen Ansatz des Hebels 98 gebildet. Der Ansatz 99 ist in eine teilzylindrische Lagerpfanne 100 eingeschnappt, die in einem um die Antriebswelle 91 verschwenkbaren Zwischenträger 101 für den Reibradträger 98 vorgesehen ist. Zur schwenkbaren Lagerung des Zwischenträgers 101 an der Antriebswelle 91 weist der Zwischenträger 101 eine Lagerbohrung 102 auf, mit der der Zwischenträger 101 auf der Antriebswelle 91 schwenkbar gelagert ist. An dem Zwischenträger 101 und an dem Reibradträger 98 greift an ihren von der Schwenkachse 99 abgewandten Enden eine diese beiden Träger 98 und 101 gegeneinander verspannende Feder 103 an, die als Zugfeder ausgebildet und in die beiden Träger 98 und 101 eingehängt ist. Die Zugfeder 103 bestimmt die Andruckkraft, mit der das an dem Reibradträger 98 drehbar gelagerte Zwischen-Reibrad 97 gegen die Antriebswelle 91 gedrückt gehalten ist. Im Bereich der Zugfeder 103 steht von dem Reibradträger 98 ein in Richtung der Zugfeder 103 verlaufender Fortsatz 104 ab, der in eine korrespondierende Ausnehmung 105 in dem Zwischenträger 101 hineinragt, um eine gegenseitige Führung der beiden Träger 98 und 101 zu erreichen.

Der als Reibradträger 98 vorgesehene Hebel ist wie aus Fig.9 deutlich ersichtlich ist, rahmenförmig ausgebildet und weist zwei quer zur Antriebswelle 91 verlaufende Hebelabschnitte 106 und 107 und zwei in Richtung der Antriebswelle 91 verlaufende Hebelabschnitte 108 und 109 auf. Zwischen diesen vier Hebelabschnitten 106 bis 109 ist das Zwischen-Reibrad 97 angeordnet, wobei in den beiden quer zur Antriebswelle 91 verlaufenden Hebelabschnitten 106 und 107 je ein mit dem Zwischen-Reibrad 97 verbundener Wellenstummel 110 und 111 zur zweifachen Lagerung des Zwischen-Reibrades 97 drehbar gelagert ist. Dabei ist in jedem der beiden Hebelabschnitte 106 und 107 eine Lagerpfanne 112 vorgesehen, in die die Wellenstummel 110 und 111 eingeschnappt sind.

Von dem Zwischenträger 102 steht nach oben hin ein in Richtung der Antriebswelle 91 weisender Anschlagstift 113 ab, der zum Zusammenwirken mit einem in den Figuren nur symbolisch angedeuteten gerätestationären Gegenanschlag 114 vorgesehen ist. Von dem Reibradträger 98 steht ebenfalls nach oben hin ein in Richtung der Antriebswelle 91 weisender Anschlagstift 115 ab, der zum Zusammenwirken mit einem auch nur symbolisch angedeuteten gerätestationären Gegenanschlag 116 vorgesehen ist. Die beiden Gegenanschläge 114 und 116 befinden sich an einem den Antriebsmechanismus 90 zum Teil überdeckenden Zwischenträger, der in den Figuren 5 bis 8 nicht dargestellt ist, um diese Zeichnungen möglichst übersichtlich zu erhalten.

Mit dem Zwischen-Reibrad 97 ist sowohl in der ersten Betriebsweise bei von der Handhabe 23 her eingeschalteter Vorwärts-Betriebsart als auch in der zweiten Betriebsweise bei von dem Fußschalter 29 her eingeschalteter Vorwärts-Betriebsart ein mit dem Vorwärts-Wickeldorn 20 koaxial verbundenes Vorwärts-Reibrad 117 antreibbar. Weiters ist mit dem Zwischen-Reibrad 97 in der zweiten Betriebsweise bei von dem Fußschalter 29 her eingeschalteter Rückwärts-Betriebsart ein mit dem Rückwärts-Wickeldorn 19 zusätzlich zum Rückwärts-Zahnrad 96 koaxial verbundenes Rückwarts-Reibrad 118 antreibbar. In der ersten Betriebsweise wird bei von der Handhabe 23 her eingeschalteter Rückwärts-Betriebsart - wobei das Zwischen-Zahnrad 95 das Rückwärts-Zahnrad 96 antreibt und das Zwischen-Reibrad 97 aufgrund der Antriebsverhältnisse danach trachtet, mit dem Vorwärts-Reibrad 117 in Antriebsverbindung zu kommen, wobei es sich um zwei einander widersprechende Antriebsweisen für die Wickeldorne 19 und 20 bzw. das Magnetband 12 handelt - zur Vermeidung eines Zusammenwirkens des Zwischen-Reibrades 97 mit dem Vorwärts-Reibrad 117 das Zwischen-Reibrad 97 mit separaten Blockiermitteln außer Antriebsverbindung von dem Vorwärts-Reibrad 117 gehalten. Auf diese separaten Blockiermittel ist nachfolgend noch näher eingegangen.

Die Trageinrichtung 89 für den Antriebsmechanismus 90 ist durch einen um eine Schwenkachse 119 verschwenkbaren Hebel gebildet, wobei die Schwenkachse 119 parallel zur Antriebswelle 91 verläuft. Die Schwenkachse 119 ist dabei durch einen gerätestationären zylindrischen Stift gebildet, auf den der Hebel 89 mit zwei Lagerpfannen 120 aufgeschnappt ist. An dem von der Schwenkachse 119 abgewandten Ende ist der Hebel 89 mittels einer gerätestationären Leiste 121 höhenmäßig geführt, wobei die Leiste 121 in eine Nut 122 des Hebels 89 eingreift. Diese Leiste 121 ist in den Figuren 5 bis 8 nicht dargestellt. Wie aus Fig.9 deutlich ersichtlich ist, ist der Hebel 89 rahmenförmig ausgebildet und weist zwei quer zur Antriebswelle 91 verlaufende Hebelabschnitte 123 und 124 und zwei in Richtung der Antriebswelle 91 verlaufende Hebelabschnitte 125 und 126 auf. In den beiden quer zur Antriebswelle 91 verlaufenden Hebelabschnitten 123 und 124 ist die Antriebswelle 91 zur zweifachen Lagerung derselben je drehbar gelagert. Hiefür ist die Antriebswelle 91 je in eine in einem dieser Hebelabschnitte 123 und 124 vorgesehene Lagerpfanne 127 eingeschnappt.

Die durch den Hebel 89 gebildete Trageinrichtung für den Antriebsmechanismus 90 ist in einer Ruhelage derselben positionierbar. Hiefür ist, wie aus Fig.5 ersichtlich ist, zu der in ihrer Ruhelage positionierten Trageinrichtung 89 benachbart ein als schmale Leiste 128 ausgebildeter Positionieranschlag vorgesehen, an den die Trageinrichtung 89 zur Positionierung in ihrer Ruhelage unter der Zugkraft der um das motorseitige Pesenrad 93 und das als Zwischenrad vorgesehene Pesenrad 92 geschlungenen Pese 94 angelegt gehalten ist. Aus der in Fig.5 dargestellten Ruhelage, die die Trageinrichtung 89 bei im Taschendiktiergerät 1 mit der Handhabe 23 eingeschalteter Betriebsart "Stop" einnimmt, ist die Trageinrichtung 89 in nur einer Verstellrichtung zu ihren Betriebslagen hin verstellbar. Die Verstellrichtung ist in den Figuren mit einem Pfeil 129 angegeben. Die Betriebslagen der Trageinrichtung 89 sind in den Figuren 6, 7 und 8 dargestellt, worauf nachfolgend noch näher eingegangen ist. Bereits jetzt sei aber schon festgehalten, daß die Trageinrichtung 89 aus ihrer in Fig.5 dargestellten Ruhelage heraus verstellbar ist, und zwar erstens in eine Vorwärts-Betriebslage, die in Fig.6 dargestellt ist und die die Trageinrichtung 89 sowohl in der ersten Betriebsweise bei von der Handhabe 23 her eingeschalteter Vorwärts-Betriebsart als auch in der zweiten Betriebsweise bei von dem Fußschalter 29 her eingeschalteter Vorwärts-Betriebsart einnimmt, und zweitens in eine Rückwärts-Betriebslage, die in Fig.7 dargestellt ist und die die Trageinrichtung 89 in der ersten Betriebsweise bei von der Handhabe 23 her eingeschalteter Rückwärts-Betriebsart einnimt, sowie drittens in eine weitere Rückwarts-Betriebslage, die in Fig.8 dargestellt ist und die die Trageinrichtung 89 in der zweiten Betriebsweise bei von dem Fußschalter 29 her eingeschalteter Rückwärts-Betriebsart einnimmt.

Zum Verstellen der Trageinrichtung 89 aus ihrer Ruhelage zu ihren Betriebslagen hin weist das Taschendiktiergerät 1 eine Verstelleinrichtung 130 auf, die einerseits mit der Handhabe 23 und anderseits mit der Trageinrichtung 89 für den Antriebsmechanismus 90 zusammenwirkt. Die Verstelleinrichtung 130 weist einen in Richtung des Doppelpfeiles 131 verschiebbar geführten Schieber 132 auf, der mit einem Fortsatz 132 versehen ist, mit dem die als Handhabe vorgesehene Schiebetaste 23 rastend verbunden ist. Der Schieber 132 ist mit einer Zahnstange 134 versehen, die mit einem unvollständigen Zahnrad 135 in Eingriff steht. Koaxial zu dem Zahnrad 135 ist der Betriebsartenschalter 40 angeordnet, dessen Schaltkontakte 41 und 42 mit dem Zahnrad 135 zwischen den in Fig.4 angegebenen vier Schaltstellungen des Betriebsartenschalters 40 verstellbar sind. Mit dem Zahnrad 135 steht eine Verzahnung 136 in Eingriff, die mit einem verdrehbar gelagerten Verstellring 137 verbunden ist. Zu seiner verdrehbaren Lagerung ist der Verstellring 137 auf eine Hülse 138 aufgesetzt, in der sich zugleich der Motor 21 zu seiner Befestigung im Taschendiktiergerät 1 befindet.

Der Verstellring 137 trägt die bereits erwähnte Leiste 128, die von dem Verstellring 137 radial absteht und die den Positionieranschlag zum Positionieren der Trageinrichtung 89 in ihrer Ruhelage bildet. Wie die Fig.5 zeigt, stützt sich die in ihrer Ruhelage befindliche Trageinrichtung 89 an der Leiste 128 unter der Zugkraft der Pese 94 ab. Anstelle der mit dem Verstellring 137 mitbewegbaren Leiste 128 als Positionieranschlag könnte auch ein gerätestationärer Positionieranschlag vorgesehen sein, an dem sich der die Trageinrichtung bildende Hebel 89 in seiner Ruhelage abstützt.

Weiters weist der Verstellring 137 einen ersten Verstellfortsatz 139 auf, der von dem Verstellring 137 radial absteht. Der erste Verstellfortsatz 139 ist zum Zusammenwirken mit einer Verstellfeder 140 vorgesehen. Die Verstellfeder 140 ist als abgebogene Stabfeder ausgebildet. Mit ihrem der Schwenkachse 119 der Trageinrichtung 89 zugewandten, in Richtung der Schwenkachse 119 abgewinkelten Ende 141 ist die Stabfeder 140 an der Trageinrichtung 89 fix eingespannt. Mit ihrem Mittelabschnitt stützt sich die Stabfeder 140 an einem von der Trageinrichtung 89 abstehenden Stift 142 ab. Das andere Ende 143 ist ebenfalls in Richtung der Schwenkachse 119 abgewinkelt ausgebildet, wobei das abgewinkelte freie Ende in einen in der Trageinrichtung 89 vorgesehenen Freistellungsschlitz 144 ragt und sich an dem dem Verstellring zugewandten Ende des Freistellungsschlitzes 144 abstützt, solange der erste Verstellfortsatz 139 mit der Stabfeder 140 nicht zusammenwirkt. Bei entsprechender Verstellung des ersten Verstellfortsatzes 139 aus der in Fig.5 dargestellten Ausgangslage im Uhrzeigersinn kommt derselbe im Bereich des Endes 143 der Stabfeder 140 mit dieser in Wirkverbindung, wobei die Stabfeder 140 in Richtung des Pfeiles 129 verstellt wird und dabei über die Stabfeder 140 und den Stift 142 eine Verstellung der Trageinrichtung 89 und des von dieser getragenen Antriebsmechanismus in Richtung des Pfeiles 129 erfolgt.

Der Verstellring 137 weist zusätzlich einen zweiten Verstellfortsatz 145 auf, der von dem Verstellring 137 radial absteht und der L-förmig und in sich federnd ausgebildet ist. Der zweite Verstellfortsatz 145 ist zum unmittelbaren Zusammenwirken mit der Trageinrichtung 89 vorgesehen. Bei entsprechender Verstellung des zweiten Verstellfortsatzes 145 aus der in Fig.5 dargestellten Ausgangslage entgegen dem Uhrzeigersinn drückt der zweite Verstellfortsatz 145 die Trageinrichtung 89 in Richtung des Pfeiles 129, und zwar so weit, bis die Trageinrichtung gegen einen nur symbolisch angedeuteten Begrenzungsanschlag 146 stößt, wobei dann der zweite Verstellfortsatz 145 federnd nachgibt. Der Begrenzungsanschlag 146 ist ebenfalls auf dem vorerwähnten, jedoch nicht dargestellten Zwischenträger vorgesehen.

Der Verstellring 137 weist noch einen dritten Verstellfortsatz 147 auf, der ebenfalls von dem Verstellring 137 radial absteht. Dieser Verstellfortsatz 147 weist ein nasenförmig ausgebildetes freies Ende 148 auf. Der dritte Verstellfortsatz 147 bildet die vorstehend bereits erwähnten Blockiermittel zum Außer-Antriebsverbindung-Halten des Zwischen-Reibrades 97 von dem Vorwärts-Reibrad 117 bei in der ersten Betriebsweise des Gerätes von der Handhabe 23 her eingeschalteter Rückwärts-Betriebsart. Der dritte Verstellfortsatz 147 ist zum Zusammenwirken mit dem Zwischenträger 101 für den Reibradträger 98 ausgebildet. Bei entsprechender Verstellung des dritten Verstellfortsatzes 147 aus der in Fig.5 dargestellten Ausgangslage entgegen dem Uhrzeigersinn verstellt der dritte Verstellfortsatz 147 mit seinem nasenförmigen freien Ende 148 den Zwischenträger 101, wodurch der Zwischenträger 101 im Uhrzeigersinn um die Antriebswelle 91 soweit in eine in Fig.7 dargestellte Position verschwenkt wird, daß das am Reibradträger 98 drohbar gelagerte Zwischen-Reibrad 97 bei seinem Antrieb in der ersten Betriebsweise im Uhrzeigersinn mit dem mit dem Vorwärts-Wickeldorn 20 verbundenen Reibrad 117 nicht in Antriebsverbindung kommen kann.

Weiters weist der Verstellring 137 eine Steuervertiefung 149 auf, mit der ein Bremshebel 150 steuerbar ist. Der Bremshebel 150 ist um eine Schwenkachse 151 schwenkbar. Eine Schraubendrehfeder 152 stützt sich mit einem Schenkel 153 an einem gerätestationären Anschlag 154 ab und belastet mit ihrem anderen Schenkel 155 den Bremshebel 150 in der Weise, daß ein freies Ende 156 des Bremshebels 150, das zum Zusammenwirken mit dem Verstellring 137 im Bereich der Steuervertiefung 149 ausgebildet ist, in Richtung zum Verstellring 137 gedrückt wird. Bei der in Fig.5 dargestellten Ausgangslage des Verstellringes 137 befindet sich das freie Ende 156 des Bremshebels 150 in der Steuervertiefung 149, ohne an ihrem Boden anzuliegen, wodurch eine am anderen Ende 157 des Bremshebels 150 vorgesehene Bremsbacke 158 gegen eine Bremsfläche 159 des mit dem Vorwärts-Wickeldorn 20 verbundenen Vorwärts-Reibrades 117 drückt. Die Bremskraft ist dabei durch die Federkraft der Schraubendrehfeder 152 mitbestimmt. Bei jeder Verstellung des Verstellringes 137 aus der in Fig.5 dargestellten Ausgangslage wird der Bremshebel 150 vom Verstellring 137 so verschwenkt, daß die Bremsbacke 158 von der Bremsfläche 159 des Vorwärts-Reibrades 117 abhebt.

In Fig.5 ist jene Betriebssituation dargestellt, in der im Taschendiktiergerät 1 die Betriebsart "Stop" eingeschaltet ist, wobei sich die Handhabe 23 in ihrer Stop-Einschaltposition befindet. Die Trageinrichtung 89 ist hiebei in ihrer Ruhelage positioniert und alle Teile der Antriebseinrichtung 87 stehen außer Funktion.

In der ersten Betriebsweise des Taschendiktiergerätes 1 zum Aufnehmen von Diktaten kann die Vorwärts-Betriebsart "Normaler Vorlauf" durch Verschieben der Handhabe 23 aus deren Stop-Einschaltposition in ihre Vorwärts-Einschaltposition, die in Fig.6 dargestellt ist, eingeschaltet werden. Dadurch wird über den Schieber 132 und das Zahnrad 135 der Betriebsartenschalter 40 betätigt und der Verstellring 137 im Uhrzeigersinn verdreht. Dadurch wird der Bremshebel 150 vom Verstellring 137 zum Lüften der Bremsbacke 158 verschwenkt und mit dem ersten Verstellfortsatz 139 über die Stabfeder 140 die Trageinrichtung 89 samt dem Antriebsmechanismus 90 auf rein mechanische Weise in Richtung des Pfeiles 129 zu einer Vorwärts-Betriebslage hin verstellt, dabei aber zuerst über diese Vorwärts-Betriebslage hinaus in eine in Fig.6 der Einfacheit und Übersichtlichkeit halber nicht dargestellte Überhublage verstellt. Durch das vorerwähnte Betätigen des Betriebsartenschalters 40 wird, wie dies anhand der Fig.4 beschrieben wurde, der Motor 21 entgegen dem Uhrzeigersinn in seiner Vorwärts-Drehrichtung VW eingeschaltet, wodurch über die Pese 94, das Zwischenrad 92 und die Antriebswelle 91 auch das Zwischen-Reibrad 97 angetrieben wird, und zwar im Uhrzeigersinn. Dadurch wird das Zwischen-Reibrad 97 automatisch bezüglich der Antriebswelle 91 entgegen dem Uhrzeigersinn verschwenkt, wobei das Zwischen-Reibrad 97 mit dem Vorwärts-Reibrad 117 in Antriebsverbindung tritt. Durch den in Drehung versetzten Motor 21 erfolgt somit ein elektromechanisches Verstellen des Zwischen-Reibrades 97. Dieses Verstellen erfolgt so lange, bis der Anschlagstift 115 am Reibradträger 98 gegen den gerätestationären Gegenanschlag 116 stößt. Durch dieses Verstellen des Zwischen-Reibrades 97 wird aufgrund des hiebei stattfindenden Abrollens des Zwischen-Reibrades 97 an dem Vorwärts-Reibrad 115 über den Reibradträger 98 und den Zwischenträger 101 die Trageinrichtung 89 aus der zwischenzeitlich kurz eingenommenen Überhublage wieder etwas entgegen der Verstellrichtung 129 in die in Fig.6 dargestellte Vorwärts-Betriebslage verstellt. Da dabei die Stabfeder 140 von dem ersten Verstellfortsatz 139 des Verstellringes 137 unverändert unterstützt bleibt, wird diese Stabfeder 140 hiebei unter Freistellung ihres Endes 143 im Freistellungsschlitz 144 gespannt und auf diese Weise die Andruckkraft erzeugt, mit der das Zwischen-Reibrad 97 gegen das Vorwärts-Reibrad 117 gedrückt wird. Über das vom Motor 21 angetriebene Zwischen-Reibrad 97 wird daher das Vorwärts-Reibrad 117 und von diesem der Vorwärts-Wickeldorn 20 und folglich das Magnetband 12 entsprechend der eingeschalteten Vorwärts-Betriebsart "Normaler Vorlauf" in der Vorwärts-Laufrichtung V angetrieben. Um die Vorwärts-Betriebsart "Normaler Vorlauf" zu beenden, braucht die Schiebetaste 23 nur in ihre Stop-Einschaltposition zurückverstellt werden.

In der ersten Betriebsweise des Taschendiktiergerätes 1 zum Aufnehmen von Diktaten kann auch die Betriebsart "Schneller Vorlauf" eingeschaltet werden, was durch Verschieben der Handhabe 23 von der in Fig.6 dargestellten Vorwarts-Einschaltposition in ihre SVL-Einschaltposition erfolgt. Dadurch wird in mechanischer Hinsicht praktisch derselbe Vorgang ausgelöst wie beim Einschalten der Betriebsart "Normaler Vorlauf", nur wird in diesem Fall der erste Verstellfortsatz 139 etwas weiter im Uhrzeigersinn verschwenkt. Unabhängig davon wirkt er aber praktisch in gleicher Weise mit der Stabfeder 140 zusammen. Auch in der Betriebsart "Schneller Vorlauf" erfolgt der Antrieb des Vorwärts-Wickeldornes 20 über das Zwischen-Reibrad 97 und das Vorwärts-Reibrad 117, wobei aber der Wickeldorn 20 rascher rotiert, weil der Motor 21 schneller umläuft, wie dies anhand der Fig.4 beschrieben wurde.

In der ersten Betriebsweise des Taschendiktiergerätes 1 zum Aufnehmen von Diktaten kann auch die Rückwärts-Betriebsart "Schneller Rücklauf" eingeschaltet werden. Hiezu muß die Handhabe 23 in ihre Rückwärts-Einschaltposition verschoben werden, die in Fig.7 dargestellt ist. Durch das Verschieben der Handhabe 23 in ihre Rückwärts-Einschaltposition wird über den Schieber 132 und das Zahnrad 135 der Betriebsartenschalter 40 betätigt und der Verstellring 137 entgegen dem Uhrzeigersinn verdreht. Dadurch wird der Bremshebel 150 vom Verstellring 137 zum Lüften der Bremsbacke 158 verschwenkt. Weiters wird mit dem zweiten Verstellfortsatz 145 die Trageinrichtung 89 samt dem Antriebsmechanismus 90 auf rein mechanische Weise in der Verstellrichtung 129 zu einer Rückwärts-Betriebslage hin verschwenkt, wobei in diesem Betriebsfall die Trageinrichtung 89 direkt in die in Fig.7 dargestellte Rückwärts-Betriebslage verstellt wird, in der die Trageinrichtung 89 sich an dem Begrenzungsanschlag 146 abstützt, wobei der an der Trageinrichtung 89 angreifende zweite Verstellfortsatz 145 federnd nachgibt und dabei geringfügig verbogen wird. In dieser Rückwärts-Betriebslage der Trageinrichtung 89 steht das Zwischen-Zahnrad 95 mit dem mit dem Rückwärts-Wickeldorn 19 koaxial verbunden Rückwärts-Zahnrad 96 in Eingriff. Beim Verdrehen des Verstellringes 137 kommt weiters der dritte Verstellfortsatz 147 desselben mit seinem freien nasenförmigen Ende 148 mit dem Zwischenträger 101 in Wirkverbindung, wobei der Zwischenträger 101 samt dem Reibradträger 98 um die Antriebswelle 91 im Uhrzeigersinn verschwenkt wird, so daß das Zwischen-Reibrad 97 nachfolgend mit dem Vorwärts-Reibrad 117 nicht auf elektromechanische Weise in Antriebsverbindung kommen kann, wenn der Motor 21 in seiner Vorwärts-Drehrichtung VW angetrieben wird. Durch das vorerwähnte Betätigen des Betriebsartenschalters 40 wird, wie dies bereits anhand der Fig.4 beschrieben wurde, der Motor 21 auch in diesem Betriebsfall entgegen dem Uhrzeigersinn in seiner Vorwärts-Drehrichtung VW eingeschaltet, wodurch über die Pese 94 und das Zwischenrad 92 das direkt mit dem Zwischenrad 92 einstückig verbundene Zwischen-Zahnrad 95 angetrieben wird, und zwar entgegen dem Uhrzeigersinn. Das in dieser Rückwärts-Betriebslage der Trageinrichtung 89 mit dem Rückwärts-Zahnrad 96 in Eingriff stehende Zwischen-Zahnrad 95 treibt dabei das Rückwärts-Zahnrad 96 und dieses den Rückwärts-Wickeldorn 19 im Uhrzeigersinn an. Folglich wird das Magnetband 12 entsprechend der eingeschalteten Rückwärts-Betriebsart "Schneller Rücklauf" in der Rückwärts-Laufrichtung R angetrieben. Um die Rückwärts-Betriebsart "Schneller Rücklauf" zu beenden, braucht die Schiebetaste 23 nur in ihre Stop-Einschaltposition zurückverstellt werden.

Um die zweite Betriebsweise des Taschendiktiergerätes 1 zum Auswerten von Diktaten durchführen zu können, muß wie bereits erwähnt zuerst ein Fußschalter 29 an das Taschendiktiergerät 1 angeschlossen werden und danach die Handhabe 23 in ihre Vorwärts-Einschaltposition verstellt werden, wie dies in Fig.8 dargestellt ist. Dabei wird durch das Betätigen der beiden Präventivschalter beim Anstecken des Fußschalters 29 verhindert, daß durch die nachfolgende Verstellung der Handhabe 23 in ihre Vorwärts-Einschaltposition im Taschendiktiergerät 1 die Vorwärts-Betriebsart eingeschaltet wird. Mit dem auf diese Weise vorbereiteten Taschendiktiergerät 1 ist nachfolgend ein Auswertebetrieb durchführbar, in dem ebenso eine Vorwärts-Betriebsart und eine Rückwärts-Betriebsart einschaltbar sind, dies aber nunmehr auf ferngesteuerte Weise vom Fußschalter 29 her.

Durch das vorerwähnte Verstellen der Handhabe 23 in ihre Vorwärts-Einschaltposition wird über die von der Handhabe 23 betätigbare Verstelleinrichtung 130 die Trageinrichtung 89 auf rein mechanische Weise sowohl zu der bereits beschriebenen Vorwärts-Betriebslage hin als auch zu einer gegenüber der Rückwärts-Betriebslage in der ersten Betriebsweise unterschiedlichen weiteren Rückwärts-Betriebslage in der zweiten Betriebsweise hin verstellt, dabei aber zuerst über diese Vorwärts-Betriebslage und auch diese weitere Rückwärts-Betriebslage hinaus in die bereits vorstehend erwähnte Überhublage in Richtung des Pfeiles 129 verschwenkt, in der die Trageinrichtung 89 samt dem darauf befindlichen Antriebsmechanismus 90 verbleibt, solange der Motor 21 vom Fußschalter 29 her nicht eingeschaltet wird.

Wenn bei in der vorerwähnten Überhublage befindlicher Trageinrichtung 89 von dem Fußschalter 29 zum ferngesteuerten Einschalten der Vorwärts-Betriebsart das Vorwärts-Steuersignal ausgelöst wird, hat dies, wie bereits anhand der Fig.4 beschrieben wurde, zur Folge, daß der Motor 21 entgegen dem Uhrzeigersinn entsprechend seiner Vorwärts-Drehrichtung VW eingeschaltet wird, wodurch dann vom Pesenrad 93 über die Pese 94, das Zwischenrad 92 und die Antriebswelle 91 auch das Zwischen-Reibrad 97 angetrieben wird, und zwar im Uhrzeigersinn. Auch in diesem Fall wird dann das Zwischen-Reibrad 97 auf elektromechanische Weise bezüglich der Antriebswelle 91 entgegen dem Uhrzeigersinn verschwenkt, wodurch das Zwischen-Reibrad 97 mit dem Vorwärts-Reibrad 117 in Antriebsverbindung tritt und dabei die Trageinrichtung 89 aus ihrer Überhublage in ihre Vorwärts-Betriebslage verstellt wird. Es liegt somit bei von der Fernsteuereinrichtung 29 her eingeschalteter Vorwärts-Betriebsart dieselbe Antriebssituation vor, die auch bei mit der Handhabe 23 eingeschalteter Vorwärts-Betriebsart gegeben ist und die in Fig.6 dargestellt ist. Es wird somit in vollkommen gleicher Weise auch bei vom Fußschalter 29 her eingeschalteter Vorwärts-Betriebsart das Magnetband 12 in der Vorwärts-Laufrichtung V angetrieben.

Um die vom Fußschalter eingeschaltete Vorwärts-Betriebsart zu beenden, braucht nur die entsprechende Fußschalterbetätigung beendet zu werden. Bei einer Beendigung der vom Fußschalter her eingeschalteten Vorwärts-Betriebsart wird, wie bereits anhand der Fig.4 beschrieben wurde, der Motor 21 kurzzeitig entsprechend seiner Rückwärts-Drehrichtung RW angetrieben. Hiedurch wird erreicht, daß das Zwischen-Reibrad 97 kurzzeitig entgegen dem Uhrzeigersinn in Drehung versetzt wird, wodurch das Zwischen-Reibrad 97 auf elektromechanische Weise außer Antriebsverbindung von dem Vorwärts-Reibrad 117 kommt, wodurch verhindert ist, daß für den Fall einer langen Nichtbenützung des Taschendiktiergerätes 1 nach einer vom Fußschalter 29 her eingeschalteten Vorwärts-Betriebsart das Zwischen-Reibrad 97 an das Vorwärts-Reibrad 117 angedrückt bleibt, was bleibende Deformationen in dem aus Gummimaterial bestehenden Friktionsteil des Zwischen-Reibrades 97 zur Folge hätte.

Wenn bei in der vorerwähnten Überhublage befindlicher Trageinrichtung 89 von dem Fußschalter 29 her zum ferngesteuerten Einschalten der Rückwärts-Betriebsart das Rückwärts-Steuersignal ausgelöst wird, hat dies, wie bereits anhand der Fig.4 beschrieben wurde, zur Folge, daß der Motor 21 im Uhrzeigersinn entsprechend seiner Rückwärts-Drehrichtung RW eingeschaltet wird. Hiedurch wird von dem mit der Motorwelle 88 verbundenen Pesenrad 93 über die Pese 94, das Zwischenrad 92 und die Antriebswelle 21 auch das Zwischen-Reibrad 97 angetrieben, und zwar in diesem Fall entgegen dem Uhrzeigersinn. Dadurch wird das Zwischen-Reibrad 97 bezüglich der Antriebswelle 91 auf elektromechanische Weise im Uhrzeigersinn verschwenkt, wobei das Zwischen-Reibrad 97 mit dem Rückwärts-Reibrad 118 in Antriebsverbindung tritt. Durch den in Drehung versetzten Motor 21 erfolgt somit auch in diesem Fall ein elektromechanisches Verstellen des Zwischen-Reibrades 97. Dieses Verstellen erfolgt so lange, bis der vom Zwischenträger 101 abstehende Anschlagstift 113 gegen den gerätestationären Gegenanschlag 114 stößt. Durch dieses Verstellen des Zwischen-Reibrades 97 wird aufgrund des hiebei stattfindenden Abrollens des Zwischen-Reibrades 97 an dem Rückwärts-Reibrad 118 über den Reibradträger 98 und den Zwischenträger 101 die Trageinrichtung 89 aus der vorerwähnten Überhublage wieder etwas entgegen dem Pfeil 129 in die in Fig.8 dargestellte weitere Rückwärts-Betriebslage verstellt. Auch in diesem Fall wird die Stabfeder 140, die von dem ersten Verstellfortsatz 139 des Verstellringes 137 unverändert unterstützt bleibt, bei der vorerwähnten Verstellung der Trageinrichtung 89 aus der Überhublage entgegen der Verstellrichtung 129 in ihre weitere Rückwärts-Betriebslage gespannt. Auf diese Weise wird die Andruckkraft erzeugt, mit der das Zwischen-Reibrad 97 gegen das Rückwärts-Reibrad 118 gedrückt wird. Über das vom Motor 21 her angetriebene Zwischen-Reibrad 97 wird das Rückwärts-Reibrad 118 im Uhrzeigersinn angetrieben, wodurch auch der Rückwärts-Wickeldorn 19 dementsprechend rotiert und folglich das Magnetband 12 entsprechend der ferngesteuert eingeschalteten Rückwärts-Betriebsart "Schneller Rücklauf" in der Rückwärts-Laufrichtung R angetrieben wird. Um die ferngesteuert eingeschaltete Rückwärts-Betriebsart "Schneller Rücklauf" zu beenden, braucht nur die entsprechende Fußschalterbetätigung beendet werden.

## Patentansprüche

1. Taschendiktiergerät, das in seiner Betriebsweise zum Aufnehmen von Diktaten in einer Hand gehalten wird und das zum Speichern und Wiedergeben von den Diktaten entsprechenden, in einer zeitlichen Aufeinanderfolge auftretenden Sprachsignalen ausgebildet ist und das ein Gehäuse und einen von dem Gehäuse umschlossenen Aufnahmeraum zum Aufnehmen eines zum Speichern der Sprachsignale in Korrelation zu ihrer zeitlichen Aufeinanderfolge vorgesehenen Speichers aufweist und das zum Durchführen einer Vorwärts-Betriebsart und einer Rückwärts-Betriebsart ausgebildet ist, wobei in der Vorwärts-Betriebsart ausgehend von einem Startspeicherbereich die Sprachsignale in Korrelation zu ihrer zeitlichen Aufeinanderfolge in den Speicher einspeicherbar oder zuvor in den Speicher in Korrelation zu ihrer zeitlichen Aufeinanderfolge eingespeicherte Sprachsignale aus dem Speicher in Korrelation zu ihrer ursprünglichen zeitlichen Aufeinanderfolge wieder auslesbar sind und wobei in der Rückwärts-Betriebsart nach einem in Korrelation zu ihrer ursprünglichen zeitlichen Aufeinanderfolge erfolgten Einspeichern oder Wiederauslesen vom Startspeicherbereich weg zu diesem Startspeicherbereich zurückkehrbar ist, und das mindestens eine von Hand aus zwischen mindestens zwei Einschaltpositionen, von denen eine Vorwärts-Einschaltposition und eine Rückwärts-Einschaltposition ist, verstellbare Handhabe aufweist, wobei in der Betriebsweise des Gerätes zum Aufnehmen von Diktaten mit der betreffenden Handhabe durch deren händische Verstellung in ihre Vorwärts-Einschaltposition die Vorwärts-Betriebsart und mit der betreffenden Handhabe durch deren händische Verstellung in ihre Rückwärts-Einschaltposition die Rückwärts-Betriebsart einschaltbar sind, dadurch gekennzeichnet, daß das Taschendiktiergerät zusätzlich zu der Betriebsweise zum Aufnehmen von Diktaten, in der das Taschendiktiergerät in einer Hand gehalten wird und seine Betriebsarten mit mindestens einer Handhabe einschaltbar sind, auch noch in einer zweiten Betriebsweise zum Auswerten von Diktaten betreibbar ist, in der die Betriebsarten des Taschendiktiergerätes anstelle mit mindestens einer Handhabe mit einer Steuereinrichtung einschaltbar sind, auf die von einer vom Taschendiktiergerät entfernten Stelle von einem Benützer des Taschendiktiergerätes einwirkbar ist und mit der zumindest ein Vorwärts-Steuersignal und ein Rückwärts-Steuersignal auslösar sind, und daß hiebei das Taschendiktiergerät eine Steuerschaltung aufweist, der das Vorwärts-Steuersignal und das Rückwärts-Steuersignal zuführbar sind und mit der so wie in der ersten Betriebsweise zum Aufnehmen von Diktaten mit der betreffenden Handhabe in der zweiten Betriebsweise zum Auswerten von Diktaten in Abhängigkeit von den beiden mit der Steuereinrichtung auslösbaren Steuersignalen ferngesteuert die Vorwärts-Betriebsart und die Rückwärts-Betriebsart einschaltbar sind.

2. Taschendiktiergerät nach Anspruch 1, dadurch gekennzeichnet, daß das Taschendiktiergerät zum Zusammenwirken mit einer durch einen Fußschalter mit einem mit einem Stecker abgeschlossenen Anschlußkabel gebildeten Steuereinrichtung ausgebildet ist, dessen Anschlußkabel und Stecker zum Weiterleiten des Vorwärts-Steuersignales und des Rückwärts-Steuersignales ausgebildet sind, und daß das Taschendiktiergerät zum Anstecken des das Anschlußkabel des Fußschalters abschließenden Steckers eine Buchse aufweist, die ebenfalls zum Weiterleiten des Vorwärts-Steuersignales und des Rückwärts-Steuersignales ausgebildet ist.

3. Taschendiktiergerät nach einem von den Ansprüchen 1 und 2, dessen Aufnahmeraum zum Aufnehmen einer Kassette ausgebildet ist, die als Speicher ein Magnetband enthält, das zwischen zwei nebeneinanderliegenden, rotierend antreibbaren Wickelkernen verläuft, von denen der eine einen Vorwärts-Wickelkern und der andere einen Rückwärts-Wickelkern bildet, und das zwei in den Aufnahmeraum ragende, zum rotierenden Antreiben der beiden Wickelkerne vorgesehene Wickeldorne aufweist, von denen der eine ein Vorwärts-Wickeldorn und der andere ein Rückwärts-Wickeldorn ist und die beide je mit mindestens einem koaxialen Antriebsrad drehfest verbunden sind, und das mit einer Antriebseinrichtung für die beiden Wickeldorne versehen ist, die einen Motor und einen von einer zumindest zwischen mindestens einer Vorwärts-Betriebslage und mindestens einer Rückwärts-Betriebslage verstellbaren Trageinrichtung getragenen Antriebsmechanismus aufweist, der mindestens ein von dem Motor rotierend antreibbares Zwischenrad aufweist und von dem bei in eine Vorwärts-Betriebslage verstellter Trageinrichtung über das mit dem Vorwärts-Wickeldorn koaxial verbundene Antriebsrad der Vorwärts-Wickeldorn zum Fortbewegen des Magnetbandes in einer Vorwärts-Laufrichtung und von dem bei in eine Rückwärts-Betriebslage verstellter Trageinrichtung über das mit dem Rückwärts-Wickeldorn koaxial verbundene Antriebsrad der Rückwärts-Wickeldorn zum Fortbewegen des Magnetbandes in einer Rückwärts-Laufrichtung antreibbar ist, und das eine einerseits mit der mindestens einen Handhabe und andererseits mit der Trageinrichtung für den Antriebsmechanismus zusammenwirkende Verstelleinrichtung aufweist, über die in der ersten Betriebsweise durch die händische Verstellung der betreffenden Handhabe in ihre Vorwärts-Einschaltposition die Trageinrichtung für den Antriebsmechanismus rein mechanisch zu mindestens einer Vorwärts-Betriebslage hin und über die in der ersten Betriebsweise durch die händische Verstellung der betreffenden Handhabe in ihre Rückwärts-Einschaltposition die Trageinrichtung für den Antriebsmechanismus rein mechanisch zu mindestens einer Rückwärts-Betriebslage hin verstellbar ist, dadurch gekennzeichnet, daß der Antriebsmechanismus, der von der in der ersten Betriebsweise durch die händische Verstellung der betreffenden Handhabe über die Verstelleinrichtung rein mechanisch verstellbaren Trageinrichtung getragen ist, in Abhängigkeit von den beiden in der zweiten Betriebsweise mit der Steuereinrichtung ausgelösten und der Steuerschaltung zugeführten Steuersignalen ferngesteuert zumindest in einem Teilbereich des Antriebsmechanismus elektromechanisch verstellbar ausgebildet ist und daß in der zweiten Betriebsweise bei in Abhängigkeit von dem Vorwärts-Steuersignal elektromechanisch verstelltem Antriebsmechanismus dieser Antriebsmechanismus den Vorwärts-Wickeldorn und bei in Abhängigkeit von dem Rückwärts-Steuersignal elektromechanisch verstelltem Antriebsmechanismus dieser Antriebsmechanismus den Rückwärts-Wickeldorn antreibt.

4. Taschendiktiergerät nach Anspruch 3, dessen Antriebseinrichtung einen in seiner Drehrichtung umschaltbaren Motor aufweist, der in einer Vorwärts-Drehrichtung und in einer zur Vorwärts-Drehrichtung entgegengesetzten Rückwärts-Drehrichtung einschaltbar ist, dadurch gekennzeichnet, daß der Motor in der zweiten Betriebsweise in Abhängigkeit von den beiden mit der Steuereinrichtung ausgelösten und der Steuerschaltung zugeführten Steuersignalen ferngesteuert in seiner Vorwärts-Drehrichtung und in seiner Rückwärts-Drehrichtung einschaltbar ist und daß der Antriebsmechanismus, der von der in der ersten Betriebsweise durch die händische Verstellung der betreffenden Handhabe über die Verstelleinrichtung rein mechanisch verstellbaren Trageinrichtung getragen ist und der mindestens ein von dem Motor antreibbares Zwischenrad aufweist, zumindest in einem Teilbereich des Antriebsmechanismus in Abhängigkeit von der in der zweiten Betriebsweise ferngesteuert eingeschalteten Drehrichtung des Motors und der Drehrichtung des von dem Motor antreibbaren Zwischenrades elektromechanisch verstellbar ausgebildet ist.

5. Taschendiktiergerät nach Anspruch 4, dadurch gekennzeichnet, daß bei in der ersten Betriebsweise durch die händische Verstellung der betreffenden Handhabe in ihre Vorwärts-Einschaltposition über die Verstelleinrichtung rein mechanisch zu einer Vorwärts-Betriebslage hin verstellter Trageinrichtung der von der Trageinrichtung getragene Antriebsmechanismus zusätzlich auch in der ersten Betriebsweise in Abhängigkeit von der durch die in ihre Vorwärts-Einschaltposition verstellten Handhabe eingeschalteten Vorwärts-Drehrichtung des Motors zumindest in einem Teilbereich des Antriebsmechanismus elektromechanisch verstellbar ist, wobei der Antriebsmechanismus nach einer solchen elektromechanischen Verstellung desselben in der ersten Betriebsweise über das mit dem Vorwärts-Wickeldorn koaxial verbundene Antriebsrad den Vorwärts-Wickeldorn antreibt.

6. Taschendiktiergerät nach einem von den Ansprüchen 4 und 5, dadurch gekennzeichnet, daß die Trageinrichtung zusätzlich zur ersten Betriebsweise auch in der zweiten Betriebsweise durch die händische Verstellung der betreffenden Handhabe in ihre Vorwärts-Einschaltposition über die Verstelleinrichtung rein mechanisch zumindest zu einer Vorwärts-Betriebslage hin verstellbar ist und daß mindestens ein von Hand aus umschaltbarer Präventivschalter vorgesehen ist, mit dem durch sein Umschalten in der zweiten Betriebsweise dem Einschalten der Vorwärts-Betriebsart durch die händische Verstellung der betreffenden Handhabe in ihre Vorwärts-Einschaltposition vorbeugbar ist.

7. Taschendiktiergerät nach einem von den Ansprüchen 3 bis 6, dadurch gekennzeichnet, daß die Trageinrichtung für den Antriebsmechanismus in einer Ruhelage derselben positionierbar und aus der Ruhelage heraus in nur einer Verstellrichtung zu ihren Betriebslagen hin verstellbar ist.

8. Taschendiktiergerät nach den Ansprüchen 4, 5, 6 und 7, dadurch gekennzeichnet, daß der Antriebsmechanismus, der von der rein mechanisch aus einer Ruhelage in nur einer Verstellrichtung zu ihren Betriebslagen hin verstellbaren, in beiden Betriebsweisen rein mechanisch zumindest zu einer Vorwärts-Betriebslage hin verstellbaren Trageinrichtung getragen ist und der in beiden Betriebsweisen zumindest in einem Teilbereich des Antriebsmechanismus in Abhängigkeit von der eingeschalteten Drehrichtung des Motors elektromechanisch verstellbar ist, eine auf der verstellbaren Trageinrichtung drehbar gelagerte Antriebswelle, mit der das vom Motor rotierend antreibbare Zwischenrad koaxial und drehfest verbunden ist, und ein mit der Antriebswelle koaxial und drehfest verbundenes Zwischen-Zahnrad, mit dem in der ersten Betriebsweise bei durch die händische Verstellung der betreffenden Handhabe in ihre Rückwärts-Einschaltposition über die Verstelleinrichtung zu einer Rückwärts-Betriebslage hin verstellter Trageinrichtung für den Antriebsmechanismus und von der in ihre Rückwärts-Einschaltposition verstellten Handhabe in seiner Vorwärts-Drehrichtung eingeschaltetem Motor ein als mit dem Rückwärts-Wickeldorn koaxial verbundenes Antriebsrad vorgesehenes Rückwärts-Zahnrad antreibbar ist, und ein einen elektromechanisch verstellbaren Teilbereich des Antriebsmechanismus bildendes, in Abhängigkeit von seiner Drehrichtung verstellbares Zwischen-Reibrad aufweist, das an einem um die Antriebswelle verschwenkbaren Reibradträger drehbar gelagert und an die Antriebswelle angedrückt gehalten und von derselben reibungsschlüssig antreibbar ist und mit dem in der ersten Betriebsweise bei durch die händische Verstellung der betreffenden Handhabe in ihre Vorwärts-Einschaltposition über die Verstelleinrichtung zu einer Vorwärts-Betriebslage hin verstellter Trageinrichtung für den Antriebsmechanismus und von der in ihre Vorwärts-Einschaltposition verstellten Handhabe in seiner Vorwärts-Drehrichtung eingeschaltetem Motor und in der zweiten Betriebsweise bei durch die händische Verstellung der betreffenden Handhabe in ihre Vorwärts-Einschaltposition über die Verstelleinrichtung zu einer Vorwärts-Betriebslage hin verstellter Trageinrichtung und über die Steuerschaltung in seiner Vorwärts-Drehrichtung ferngesteuert eingeschaltetem Motor ein als mit dem Vorwärts-Wickeldorn koaxial verbundenes Antriebsrad vorgesehenes Vorwärts-Reibrad antreibbar ist und mit dem in der zweiten Betriebsweise bei durch die händische Verstellung der betreffenden Handhabe in ihre Vorwärts-Einschaltposition über die Verstelleinrichtung zu einer Rückwärts-Betriebslage hin verstellter Trageinrichtung und über die Steuerschaltung in seiner Rückwärts-Drehrichtung ferngesteuert eingeschaltetem Motor ein mit dem Rückwärts-Wickeldorn koaxial verbundenes Rückwärts-Reibrad antreibbar ist und das in der ersten Betriebsweise bei durch die händische Verstellung der betreffenden Handhabe in ihre Rückwärts-Einschaltposition über die Verstelleinrichtung zu einer Rückwärts-Betriebslage hin verstellter Trageinrichtung für den Antriebsmechanismus und von der in ihre Rückwärts-Einschaltposition verstellten Handhabe in seiner Vorwärts-Drehrichtung eingeschaltetem Motor mit separaten Blockiermitteln außer Antriebsverbindung von dem Vorwärts-Reibrad gehalten ist.

9. Taschendiktiergerät nach Anspruch 8, dadurch gekennzeichnet, daß der Reibradträger durch einen um eine Schwenkachse verschwenkbaren Hebel gebildet ist, dessen Schwenkachse parallel zur Antriebswelle verläuft, daß ein um die Antriebswelle verschwenkbarer Zwischenträger für den Reibradträger vorgesehen ist, an dem der Reibradträger schwenkbar gelagert ist, und daß an dem Zwischenträger und an dem Reibradträger eine diese beiden Träger gegeneinander verspannende Feder angreift, die die Andruckkraft bestimmt, mit der das an dem Reibradträger drehbar gelagerte Zwischen-Reibrad gegen die Antriebswelle gedrückt gehalten ist.

10. Taschendiktiergerät nach den Ansprüchen 8 und 9, dadurch gekennzeichnet, daß die separaten Blockiermittel zum Außer-Antriebsverbindung-Halten des Zwischen-Reibrades von dem Vorwärts-Reibrad durch einen Verstellfortsatz der Verstelleinrichtung gebildet sind, der zum Zusammenwirken mit dem Zwischenträger für den Reibradträger ausgebildet ist.

11. Taschendiktiergerät nach einem von den Ansprüchen 9 und 10, dadurch gekennzeichnet, daß der als Reibradträger vorgesehene Hebel rahmenförmig ausgebildet ist und zwei quer zur Antriebswelle verlaufende Hebelabschnitte aufweist, in denen je ein mit dem Zwischen-Reibrad verbundener Wellenstummel zur zweifachen Lagerung des Zwischen-Reibrades drehbar gelagert ist.

12. Taschendiktiergerät nach einem von den Ansprüchen 8 bis 11, dadurch gekennzeichnet, daß die verstellbare Trageinrichtung für den Antriebsmechanismus durch einen um eine Schwenkachse verschwenkbaren Hebel gebildet ist, dessen Schwenkachse parallel zur Antriebswelle des Antriebsmechanismus verläuft und der rahmenförmig ausgebildet ist und zwei quer zur Antriebswelle verlaufende Hebelabschnitte aufweist, in denen die Antriebswelle zur zweifachen Lagerung derselben je drehbar gelagert ist.

13. Taschendiktiergerät nach einem von den Ansprüchen 3 bis 12, dadurch gekennzeichnet, daß das von dem Motor antreibbare Zwischenrad des Antriebsmechanismus als Pesenrad ausgebildet ist, daß mit der Welle des Motors ein weiteres Pesenrad drehfest verbunden ist und daß die beiden Pesenräder mit einer um die beiden Pesenräder geschlungenen Pese antriebsmäßig verbunden sind.

14. Taschendiktiergerät nach einem von den Ansprüchen 7 bis 13, dadurch gekennzeichnet, daß zu der in ihrer Ruhelage positionierten Trageinrichtung für den Antriebsmechanismus benachbart ein Positionieranschlag vorgesehen ist, an den die Trageinrichtung zur Positionierung in ihrer Ruhelage unter der Zugkraft der Pese angelegt gehalten ist.

15. Taschendiktiergerät nach Anspruch 6, dadurch gekennzeichnet, daß der von Hand aus umschaltbare Präventivschalter in der zum Anstecken des das Anschlußkabel des Fußschalters abschließenden Steckers vorgesehenen Buchse enthalten ist und beim händischen Anstecken des Steckers zur Ermöglichung der zweiten Betriebsweise der in der Buchse enthaltene Präventivschalter über den Stecker umschaltbar ist.

FIG.1

EP 0 501 583 A2

FIG.2

FIG.3

26

FIG.4

FIG.5

FIG.6

FIG.7

FIG.8

FIG.9

EP 0 501 583 A2